# EUROPEAN PATENT APPLICATION

(11) **EP 1 713 009 A1**
(43) Date of publication of application: **18.10.2006**
(21) Application number: 05709568.9
(22) Date of filing: 01.02.2005
(51) Int. Cl.: G06F 17/30, G06Q 10/00

(54) **TERMINAL APPARATUS AND RECEIVED DATA DISPLAY METHOD**

(30) Priority: 04.02.2004 JP 2004028562; 05.02.2004 JP 2004029625; 05.02.2004 JP 2004029889
(71) Applicant: Matsusita Electric Industrial Co., Ltd., Kadoma-shi, Osaka 571-8501 (JP)
(72) Inventor: IDO, Daiji, c/o Matsushita Electric Ind. Co., Ltd., Chuo-ku, Osaka-shi, Osaka 540-6319 (JP); YONEMOTO, Yoshifumi, c/o Matsushita El. Ind. Co., Chuo-ku, Osaka-shi, Osaka 540-6319 (JP); YAMAGUCHI, Takao, c/o Matsushita El. Ind. Co., Ltd, Chuo-ku, Osaka-shi, Osaka 540-6319 (JP); SATO, Junichi, c/o Matsushita El. Ind. Co., Ltd., Chuo-ku, Osaka-shi, Osaka 540-6319 (JP); TAKEI, Ichiro, c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/001422
(87) International publication number: WO 2005/076157

(57) **Abstract**

A terminal apparatus capable of easily selecting a most appropriate product as a gift for each gift receiver by displaying product information in consideration of the gift receiver. In this apparatus, product information reception section (103) extracts product information including attribute information from a received signal, so that it is possible to obtain receiver information, genre information and adequacy level information included in the attribute information. Storage section (104) stores personal information which is information indicating features of predetermined gift receivers such as "birthday", "sex" and "age." Product information selection section (105) decides whether or not some of the features of the receiver in the receiver information correspond to the features of the gift receiver in the personal information, and when the receiver information includes the corresponding features, product information selection section (105) arranges the product information so that the product information including the corresponding receiver information comes to the top. Data display section (106) displays the product information in order of the arrangement.

## Description

### Technical Field

The present invention relates to a terminal apparatus and received data display method, for example, a terminal apparatus and received data display method that receives distributed data transmitted from a distribution server.

### Background Art

In a third-generation mobile communication system, a broadcasting service for simultaneously transmitting distributed data to a number of cellular phones is known (e.g., Patent Document 1).

According to a conventional broadcasting service, a user transmits information of the user's location measured using GPS or the like to a server and the server that has received the information of the user' s location selects contents corresponding to the user's location and transmits the information to the user's terminal apparatus. In this way, in the conventional broadcasting service, the server edits contents.
Patent Document 1: Japanese Patent Application Laid-Open No.2000-222331

### Disclosure of Invention

### Problems to be Solved by the Invention

However, the conventional terminal apparatus and received data display method provides a service such that the server refers to the user's location information and distributes information about shops in the neighborhood of the user' s current location to the user, and while the server provides services of distributing information about products to be purchased by the user, it does not provide the user with service of distributing information about products in consideration of giving gifts. For this reason, when selecting a gift using a broadcasting service, there is a problem that it is difficult to select an appropriate gift for the user's acquaintance or the like. Furthermore, according to the conventional terminal apparatus and received data display method, when the user forgets preferences or the like of the acquaintance or the user does not carry paper on which preferences or the like of the acquaintance are written when purchasing a gift, there is a problem that the user may purchase a product which is not appropriate as a gift to the acquaintance.

It is an object of the present invention to provide a terminal apparatus and received data display method capable of easily selecting the most appropriate product as a gift for each gift receiver by displaying product information in consideration of the gift receiver.

### Means for Solving the Problem

The terminal apparatus of the present invention employs a configuration comprising: a personal information storage section that stores personal information which is information indicating features of predetermined gift receivers, a reception section that receives receiver information which is information indicating features of a receiver who is assumed to receive the gift and product information which is information of the gift including the receiver information, a product information selection section that arranges the product information received by the reception section so that the product information including the receiver information of the receiver whose features match the features of the gift receiver comes to the top, and a display section that displays the product information in order in which the information is arranged by the product information selection section.

Furthermore, the terminal apparatus of the present invention employs a configuration comprising: a personal information storage section that stores personal information which is information indicating features of predetermined gift receivers, a reception section that receives receiver information which is information indicating features of a receiver who is assumed to receive the gift and product information which is information of the gift including the receiver information, a product information selection section that decides whether or not the features of the gift receiver match the features of the receiver and selects, when the decision result shows that the features match, the product information including the receiver information of the receiver whose features match the features of the gift receiver, and a display section that displays the product information selected by the product information selection section including the decision result when the features match.

The received data display method of the present invention comprises a step of storing personal information which is information indicating features of predetermined gift receivers, a step of receiving receiver information which is information indicating features of a receiver assumed to receive a gift and product information which is information of the gift including the receiver information, a step of arranging the received product information so that the product information including the receiver information of a receiver whose features match the features of the gift receiver comes to the top, and a step of displaying the product information in order of the arrangement.

Furthermore, the received data display method of the present invention comprises a step of storing personal information which is information indicating features of predetermined gift receivers, a step of receiving receiver information which is information indicating features of a receiver assumed to receive a gift and product information which is information of the gift including the receiver information, a step of deciding whether or not the features of the gift receiver match the features of the receiver and selecting, when the decision result shows that the features match, the product information including the receiver information of the receiver whose features match the features of the gift receiver and a step of displaying the product information selected including the decision result when the features match.

### Advantageous Effect of the Invention

According to the present invention, product information is displayed in consideration of a gift receiver, thereby enabling easy selection of a most appropriate product as a gift for each gift receiver.

### Brief Description of Drawings

FIG.1 is a block diagram showing the configuration of the terminal apparatus according to Embodiment 1 of the present invention;
FIG.2 is a block diagram showing the configuration of the distribution server according to Embodiment 1 of the present invention;
FIG. 3 is a schematic view showing a network according to Embodiment 1 of the present invention;
FIG.4 illustrates product information according to Embodiment 1 of the present invention;
FIG.5A illustrates attribute information according to Embodiment 1 of the present invention;
FIG. 5B illustrates attribute information according to Embodiment 1 of the present invention;
FIG.5C illustrates attribute information according to Embodiment 1 of the present invention;
FIG.5D illustrates attribute information according to Embodiment 1 of the present invention;
FIG.5E illustrates attribute information according to Embodiment 1 of the present invention;
FIG.6 illustrates personal information according to Embodiment 1 of the present invention;
FIG.7 illustrates product information according to Embodiment 1 of the present invention;
FIG.8 illustrates a state in which the product information according to Embodiment 1 of the present invention is displayed;
FIG.9 illustrates a state in which the product information according to Embodiment 1 of the present invention is displayed;
FIG.10 illustrates a state in which the product information according to Embodiment 1 of the present invention is displayed;
FIG.11 is a block diagram showing the configuration of a terminal apparatus according to Embodiment 2 of the present invention;
FIG.12 is a flow chart showing the operation of a product information selection section according to Embodiment 2 of the present invention;
FIG.13 illustrates product information according to Embodiment 2 of the present invention;
FIG.14 illustrates a state in which the product information according to Embodiment 2 of the present invention is displayed;
FIG.15 is a block diagram showing the configuration of a terminal apparatus according to Embodiment 3 of the present invention;
FIG.16 is a block diagram showing the configuration of a terminal apparatus according to Embodiment 4 of the present invention;
FIG.17 illustrates schedule book information according to Embodiment 4 of the present invention;
FIG.18 illustrates a state in which product information according to Embodiment 5 of the present invention is displayed;
FIG.19 shows the construction of a contents providing system according to Embodiment 6 of the present invention;
FIG.20 is a block diagram of a contents playback terminal according to Embodiment 6 of the present invention;
FIG.21 shows the configuration of the playback output section of the contents playback terminal shown in FIG.20;
FIG.22 is a flow chart illustrating a contents playback method according to Embodiment 6 of the present invention;
FIG.23 illustrates contents playback information according to Embodiment 6 of the present invention;
FIG.24 illustrates control rule information according to Embodiment 6 of the present invention;
FIG.25 illustrates history information according to Embodiment 6 of the present invention;
FIG.26 illustrates attribute information according to Embodiment 6 of the present invention;
FIG.27 illustrates control rule information according to Embodiment 7 of the present invention;
FIG.28 illustrates control rule information according to Embodiment 9 of the present invention;
FIG.29 illustrates control rule information according to Embodiment 10 of the present invention;
FIG.30 is a block diagram showing the configuration of a terminal apparatus according to Embodiment 12 of the present invention;
FIG.31 is a block diagram showing the configuration of a distribution server according to Embodiment 12 of the present invention;
FIG.32 is a flow chart showing the operation of the terminal apparatus according to Embodiment 12 of the present invention;
FIG.33 illustrates station information according to Embodiment 12 of the present invention;
FIG.34 illustrates a state in which train service information according to Embodiment 12 of the present invention is displayed;
FIG.35 is a block diagram showing the configuration of a terminal apparatus according to Embodiment 13 of the present invention;
FIG.36 is a block diagram showing the configuration of a distribution server according to Embodiment 13 of the present invention;
FIG.37 is a flow chart showing the operation of the terminal apparatus according to Embodiment 13 of the present invention;
FIG.38 illustrates event information according to Embodiment 13 of the present invention;
FIG.39 illustrates a state in which event holding information according to Embodiment 13 of the present invention is displayed;
FIG.40 is a block diagram showing the configuration of a terminal apparatus according to Embodiment 14 of the present invention; and
FIG.41 is a block diagram showing the configuration of a terminal apparatus according to Embodiment 15 of the present invention.

### Best Mode for Carrying Out the Invention

Now, embodiments of the present invention will be described in detail with reference to the accompanied drawings.

### (Embodiment 1)

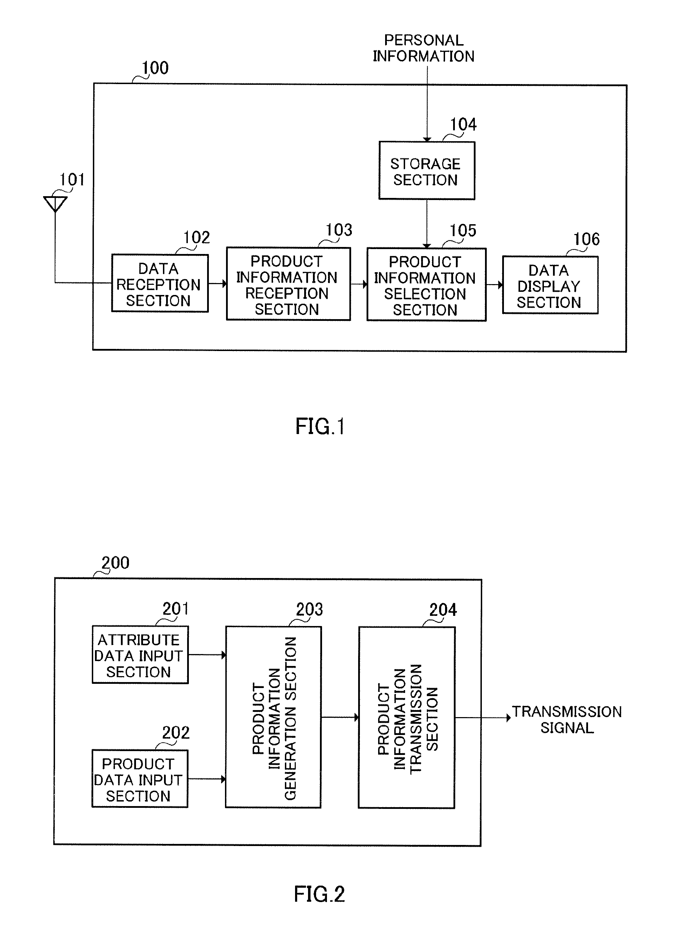

FIG.1 is a block diagram showing the configuration of terminal apparatus 100 according to Embodiment 1 of the present invention.

Data reception section 102 down-converts a received signal received through antenna 101 from a radio frequency to a baseband frequency and outputs it to product information reception section 103.

Product information reception section 103 extracts product information including attribute information from the received signal input from data reception section 102 and outputs it to product information selection section 105. The attribute information includes receiver information, genre information and adequacy level information. Here, the "product information" is information about a product as a gift, the "receiver information" is information indicating features of the receiver assumed to be adequate to receive a gift for each product and the "adequacy level information" is information about a general adequacy level of each product as a gift and the "genre information" is information indicating the genre of the product.

Storage section 104 stores personal information which is information indicating features of each gift receiver such as a person or a company or the like who the user of terminal apparatus 100 predetermined as a gift receiver and outputs the stored personal information to product information selection section 105 at timing at which the product information is input from product information reception section 103 to product information selection section 105. Here, the personal information includes sex, age, telephone number, address, e-mail address, specific date and time on which an event such as a birthday, anniversary occurs and a combination of these items.

Product information selection section 105 selects product information based on product information input from product information reception section 103 and personal information input from storage section 104. For example, product information selection section 105 decides whether or not the sex and age of a gift receiver in the personal information match the sex and age of the receiver in the receiver information, selects the receiver information of the receiver whose sex and age match the sex and age of the gift receiver in the personal information and selects the product information including the selected receiver information. Then, product information selection section 105 performs processing of arranging the selected product information at the top or processing of adding the information of the decision result to the selected product information when the features match and then outputs the product information to data display section 106.

Data display section 106 displays product information input from product information selection section 105 in order of the arrangement of the product information. The method of displaying the product information will be explained later.

Next, the configuration of distribution server 200 will be explained using FIG.2. FIG.2 is a block diagram showing the configuration of distribution server 200.

Attribute data input section 201 outputs data of the genre of each product input from the outside, data of a receiver assumed for each product as a gift and data of an adequacy level indicating a general adequacy level of each product as a gift to product information generation section 203.

Product data input section 202 outputs the data of the product as a gift input from the outside to product information generation section 203.

Using the data of the product input from product data input section 202, data of the genre input from attribute data input section 201, data of the receiver and data of the adequacy level, product information generation section 203 selects the data of the genre corresponding to the data of each product as a gift, data of the receiver and data of the adequacy level and then generates product information including the data of the selected genre, data of the receiver and data of the adequacy level in the data of each product and outputs the product information to product information transmission section 204. When the data of the genre, data of the receiver and data of the adequacy level are included in the product data, the genre information, receiver information and adequacy level information are included in the product information as the attribute information.

Product information transmission section 204 transmits the product information input from product information generation section 203 as a transmission signal.

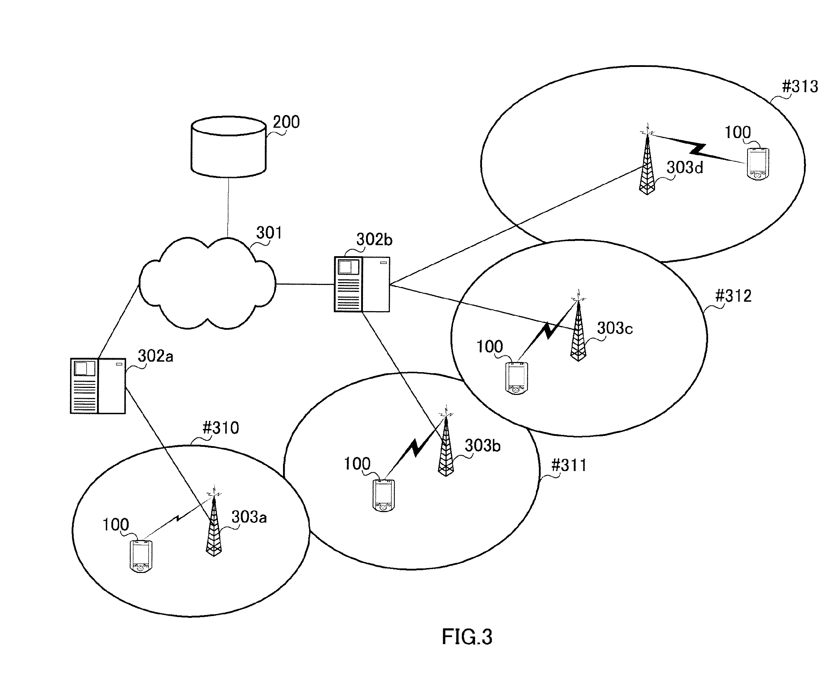

Next, the process terminal apparatus 100 of receiving product information as distribute data transmitted from distribution server 200 will be explained using FIG.3 to FIG.5.

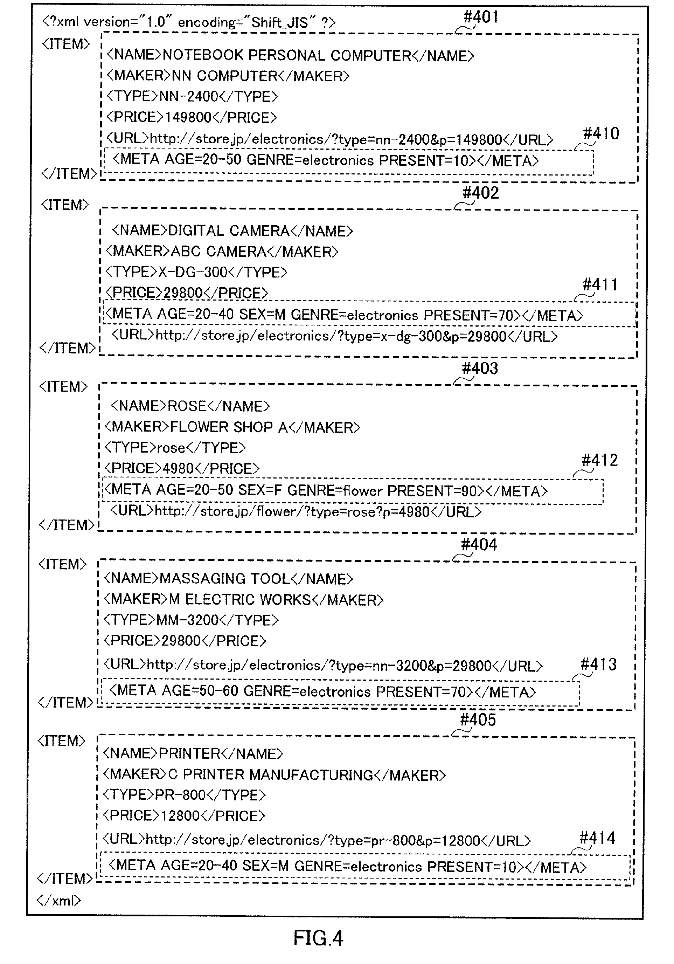

According to FIG.3, distribution server 200 outputs the product information which is XML format data to core network 301. As shown in FIG.4, information of each product is specified by an <ITEM> tag bracketed by <ITEM> and </ITEM> and arranged in an arbitrary order. Furthermore, in the information of each product, the product name is specified by a <NAME> tag bracketed by <NAME> and </NAME>, the manufacturer name is specified by a <MAKER> tag bracketed by <MAKER> and </MAKER>, the model number is specified by a <TYPE> tag bracketed by <TYPE> and </TYPE>, the selling price is specified by a <PRICE> tag bracketed by <PRICE> and </PRICE> and the access point when the user makes a purchase is specified by a <URL> tag bracketed by <URL> and </URL>. Furthermore, in the information of each product, the attribute information is specified by a <META> tag bracketed by <META> and </META>. The receiver information is information about the age and sex, for example. In this case, the age is expressed by "AGE", the sex is expressed by "SEX", the genre is expressed by "GENRE" and the adequacy level is expressed by "PRESENT". Such attribute information is determined by the distributor of the product based on marketing experiences or the like so as to be able to conduct an effective sale. Suppose the attribute information that does not specify "SEX" is targeted at both male and female.

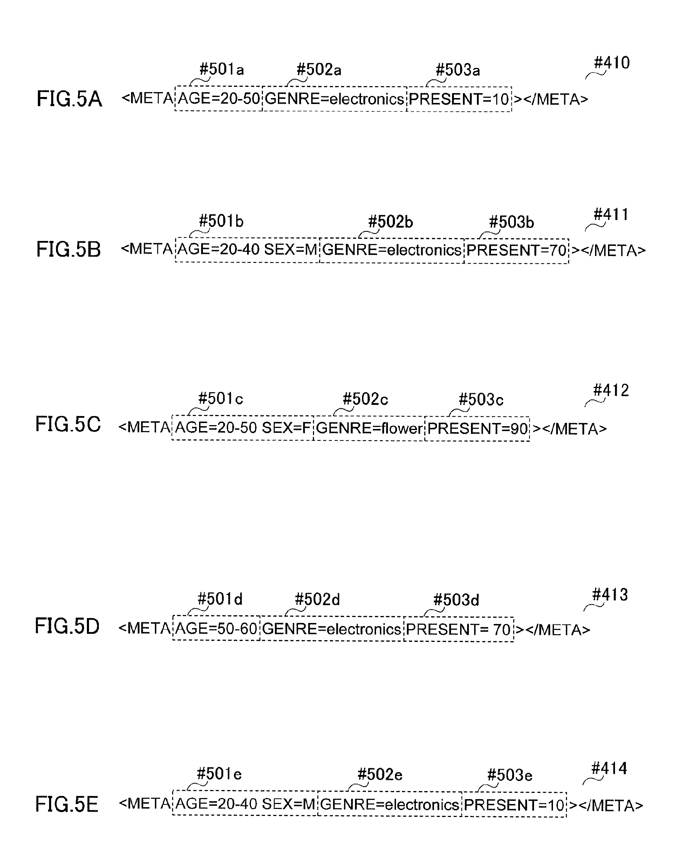

FIG. 5 illustrates attribute information included in the information of each product. According to FIG.5, for example, attribute information #410 included in product information #401 of product "notebook personal computer" includes receiver information #501a of "age=20 to 50", genre information #502a of "genre =electronics" and adequacy level information #503a of "adequacy level =10%" as shown in FIG.5A. Furthermore, attribute information #411 included in product information #402 of product "digital camera" includes receiver information #501b of "age=20 to 40" and "sex=male", genre information #502b of "genre =electronics" and adequacy level information #503b of "adequacy level =70%" as shown in FIG. 5B. Attribute information #412 included in product information #403 of product "rose" includes receiver information #501c of "age=20 to 50" and "sex=female", genre information #502c of "genre =flower" and adequacy level information #503c of "adequacy level =90%" as shown in FIG.5C. Attribute information #413 included in product information #404 of product "massaging tool" includes receiver information #501d of "age=50 to 60", genre information #502d of "genre =electronics" and adequacy level information #503d of "adequacy level =70%" as shown in FIG.5D. Attribute information #414 included in product information #405 of product "printer" includes receiver information #501e of "age=20 to 40" and "sex=male", genre information #502(e) of "genre =electronics" and adequacy level information #503(e) of "adequacy level =10%" as shown in FIG.5E.

The information of each product shown in FIG.4 distributed from distribution server 200 arrives at each network control apparatus 302a, 302b via core network 301. Each network control apparatus 302a, 302b can transmit distribute data to a number of base station apparatuses, network control apparatus 302a transmits product information to base station apparatus 303a of cell #310 and network control apparatus 302b transmits product information to base station apparatus 303b of cell #311, base station apparatus 303c of cell #312 and base station apparatus 303d of cell #313. Then, each base station apparatus transmits product information to terminal apparatus 100 which is carrying out communication in the cell. Terminal apparatus 100 receives product information, adaptively converts and displays the received product information.

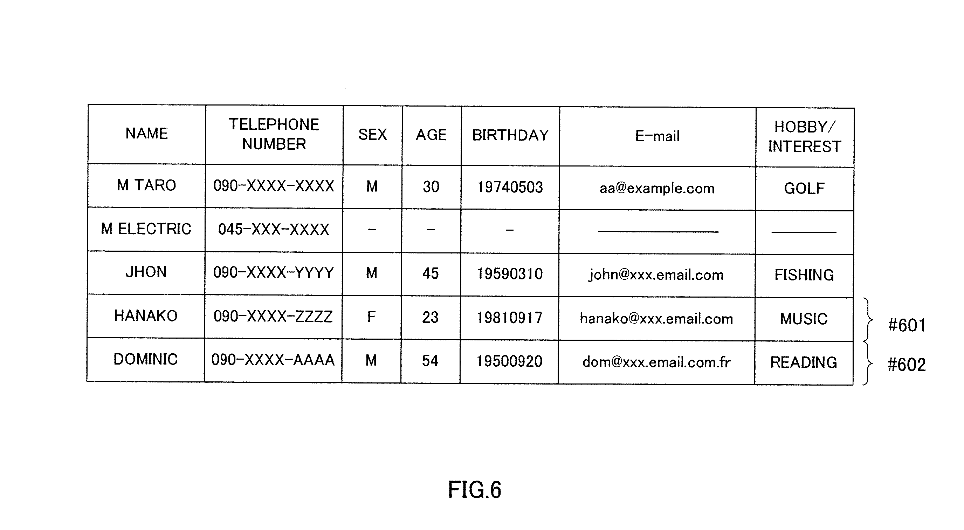

Next, the method for terminal apparatus 100 that has received product information to display the product information will be explained using FIG.6 to FIG.10.

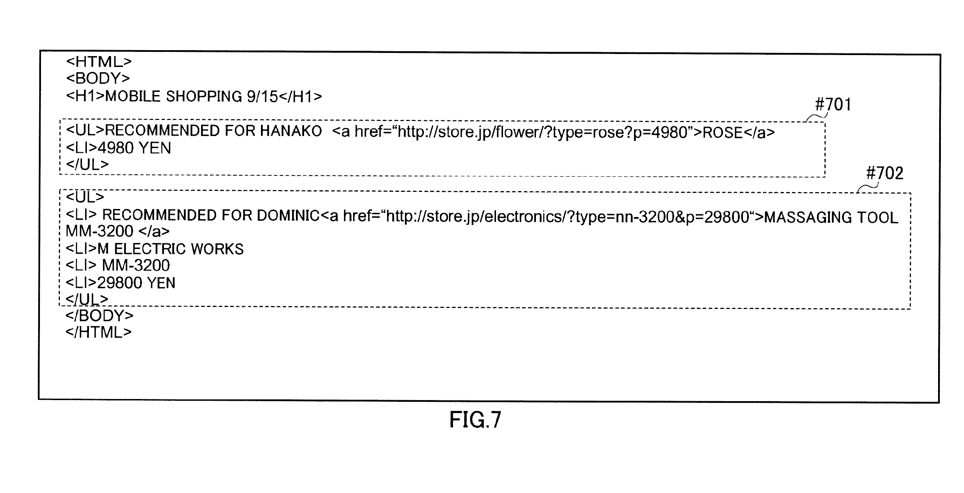

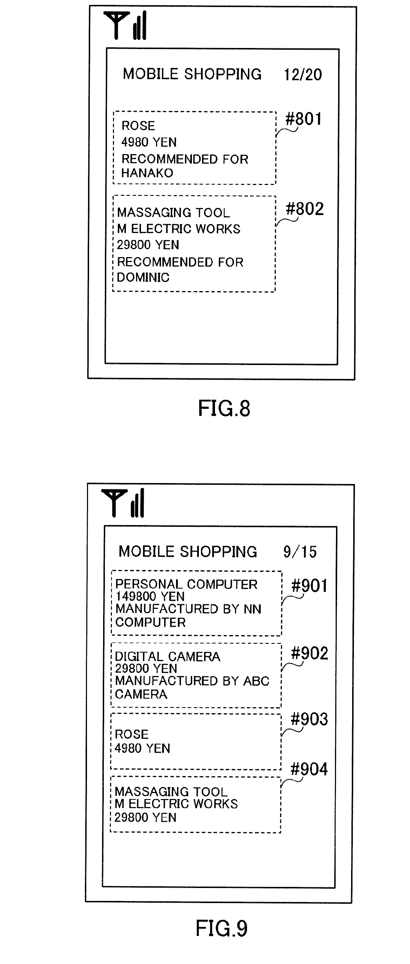

FIG. 6 illustrates personal information stored in storage section 104, FIG. 7 illustrates product information output from product information selection section 105 and FIG. 8 to FIG.10 illustrate product information displayed on terminal apparatus 100.

In terminal apparatus 100 that has received product information, product information selection section 105 compares information indicating features of each gift receiver in the personal information shown in FIG.6 with attribute information included in the information of each product shown in FIG.4. Then, when the receiver information included in the attribute information includes features corresponding to features of each gift receiver of the personal information, product information selection section 105 selects product information including the corresponding receiver information.
Then, product information selection section 105 performs processing of arranging product information so that the selected product information comes to the top or processing of adding information of a decision result when the features of the gift receiver match the features of the receiver to the selected product information.

For example, from FIG.6, in personal information #601 of gift receiver "Hanako", "age=23" comprising a feature of gift receiver "Hanako" corresponds to attribute information #410 which includes receiver information #501a of "age=20 to 50", attribute information #411 including receiver information #501b of "age=20 to 40", attribute information #412 including receiver information #501c of "age=20 to 50" and attribute information #414 of receiver information #501e of "age=20 to 40". Furthermore, of attribute information #410, #411, #412, #414, in personal information #601 of gift receiver "Hanako," "sex=female" comprising a feature of gift receiver "Hanako" corresponds to attribute information #410 including receiver information 501a of "sex=female" and attribute information #412 including receiver information 501c of "sex=female". Furthermore, as a result of comparing adequacy level information #503a which is "adequacy level =10%" included in attribute information #410 with adequacy level information #503c which is "adequacy level =90%" included in attribute information #412, adequacy level information #503c has an adequacy level greater than that of adequacy level information #503a, and therefore attribute information #412 remains. Therefore, product information selection section 105 selects attribute information #412 including product information #403.

Furthermore, in personal information #602 of gift receiver "Dominic", "age=54" comprising a feature of gift receiver "Dominic" only corresponds to attribute information #413 including receiver information #501d of "age=50 to 60". Therefore, product information selection section 105 selects product information #404 including attribute information #413. None of "hobby/interest" in the personal information in FIG.6 corresponds to genre "GENRE" in the attribute information, and therefore it is not used to select the product information, but if the attribute information includes a genre of "genre =music" or "genre =book", "hobby/interest" in the personal information is also used to select the product information.

Next, product information selection section 105 converts the product information from XML format data to HTML format data using XSLT so as to be displayed with a browser installed in terminal apparatus 100. When the selected product information is displayed at the top, as shown in FIG.7, product information selection section 105 arranges the information so that product information #701 converted from product information #403 and product information #702 converted from product information #404 come to the top. On the other hand, when the selected product information is not displayed at the top, product information selection section 105 adds the information of the decision result when the features of the gift receiver match the features of the receiver to selected product information #403, #404 and keeps the same order of the received product information.

Next, when the product information selected by product information selection section 105 is displayed at the top, data display section 106 displays product information #701 as product information #801 and also displays product information #702 as product information #802. With a character display "Recommended for Hanako", data display section 106 recommends a rose as a present for gift receiver "Hanako" and displays the price of the rose as additional information. When the user of terminal apparatus 100 selects (clicks on) the underlined part of the product information displayed on data display section 106, it is possible to move to the next step to purchase the rose. Furthermore, through a character display "Recommended for Dominic", data display section 106 recommends a massaging tool as a present for gift receiver "Dominic" and displays the price, maker and model of the massaging tool as additional information. Then, when the user of terminal apparatus 100 selects (clicks on) the underlined part of the product information displayed on data display section 106, it is possible to move to the next step to purchase the massaging tool.

On the other hand, when there is no attribute of the personal information included in the attribute information included in the product information, as shown in FIG.4 and FIG.9, product information selection section 105 converts product information #401 which is XML format data to HTML format data and then displays it as product information #901 on data display section 106. Likewise, product information selection section 105 converts product information #402 which is XML format data to HTML format data, then displays it as product information #902 on data display section 106, product information selection section 105 then converts product information #403 which is XML format data to HTML format data and displays it as product information #903 on data display section 106, product information selection section 105 then converts product information #404 which is XML format data to HTML format data and then displays it as product information #904 on data display section 106.

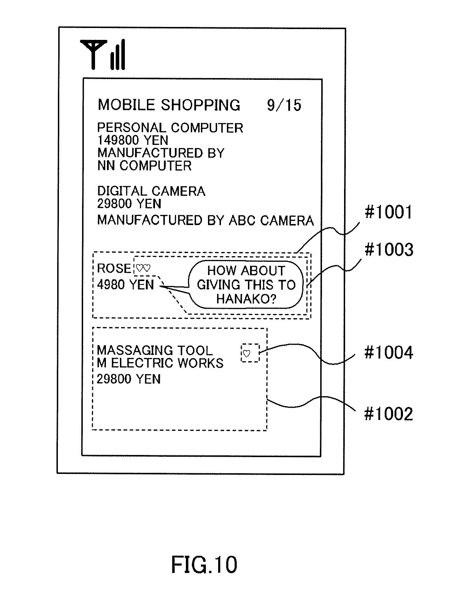

Furthermore, when the product information selected by product information selection section 105 is not displayed at the top, that is, when the product information is displayed in the order in which the information is received, as shown in FIG.10, data display section 106 converts product information #403 selected by product information selection section 105 to HTML format data, then displays it as product information #1001, converts selected product information #404 to HTML format data and displays it as product information #1002. At this time, when information indicating that the product information has been selected by product information selection section 105 is added to the product information, product information #1001 of data display section 106 displays information #1003 which is a present suitable for "Hanako" and product information #1002 displays information #1004 which is a present suitable for "Dominic." Data display section 106 displays more heart marks for product information whose adequacy level of the adequacy level information is greater.

In this way, according to this Embodiment 1, when some features of the receiver of the receiver information included in the product information correspond to the features of the gift receiver in the personal information, the product information is displayed in consideration of the correspondence, so that an optimum gift becomes quite obvious for each gift receiver by viewing the display of the terminal apparatus , and therefore it is possible to easily select the most appropriate product as a gift for each gift receiver.
Furthermore, according to this Embodiment 1, it is not necessary for the distribution server side to perform processing for displaying product information in consideration of the gift receiver, and therefore it is possible to reduce the load of the distribution server.

### (Embodiment 2)

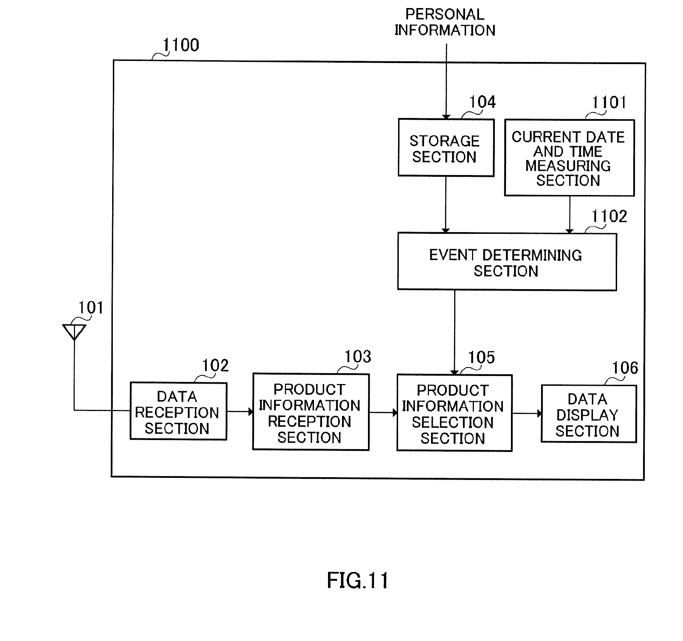

FIG.11 is a block diagram showing the configuration of terminal apparatus 1100 according to Embodiment 2 of the present invention.

Terminal apparatus 1100 according to this Embodiment 2 corresponds to terminal apparatus 100 according to Embodiment 1 shown in FIG.1 with current date and time measuring section 1101 and event determining section 1102 added as shown in FIG.11. In FIG.11, the same components as those in FIG.1 are assigned the same reference numerals and explanations thereof will be omitted.

Current date and time measuring section 1101 measures the current date and time and outputs the measured date and time information which is information about the measured date and time to event determining section 1102.

Event determining section 1102 subtracts the date and time of the measured date and time information input from current date and time measuring section 1101 from a specific date and time indicating features of a gift receiver in the personal information input from storage section 104. When the subtraction result is equal to or lower than a threshold, event determining section 1102 decides that an event is approaching and outputs information about the approaching event and personal information of the gift receiver for whom the subtraction result is equal to or lowers than the threshold to product information selection section 105. On the other hand, when the subtraction result is greater than the threshold, event determining section 1102 outputs nothing.

When the event information and personal information are input from event determining section 1102, product information selection section 105 selects product information based on the product information input from product information reception section 103 and personal information input from event determining section 1102 and outputs the event information together with the selected product information to data display section 106.

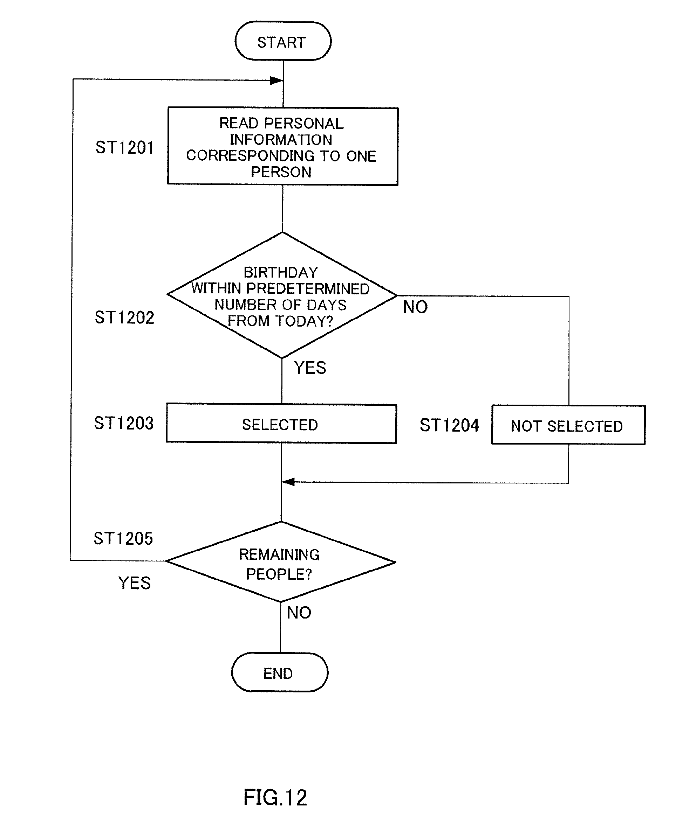

Next, the operation of product information selection section 105 of terminal apparatus 1100 will be explained using FIG.12. FIG.12 is a flow chart illustrating the operation of product information selection section 105. Suppose terminal apparatus 1100 receives the product information shown in FIG.4 and storage section 104 stores the personal information shown in FIG.6.

First, product information selection section 105 reads personal information corresponding to one person (step ST1201).

Next, product information selection section 105 decides whether information about events for which the "birthday" in the personal information of each person falls within predetermined days from the current date and time has been input or not, that is, decides whether or not information about events for which the result of subtracting the date of the measured date and time information from the date of "birthday" of each person is equal to or lower than a threshold has been input (step ST1202).

When the information about events for which the "birthday" of each gift receiver falls within predetermined days from the current date and time has been input, product information selection section 105 decides whether or not some features of the receiver information included in the product information correspond to features other than "birthday" in the personal information of the gift receiver whose "birthday" falls within predetermined days from the current date and time, and when there is receiver information having the corresponding features, product information selection section 105 selects the product information including the corresponding receiver information (step ST1203).

For example, when the current date and time is September 15, and 7 days is set as a threshold, people whose birthdays fall between September 15 and September 22 which is 7 days after September 15 are gift receiver "Hanako" and gift receiver "Dominic", and therefore gift receiver "Hanako" and gift receiver "Dominic" are selected. Then, using the same method as that in above described Embodiment 1, product information selection section 105 decides whether or not there are features in the receiver information included in the product information corresponding to features of "sex=female" and "age=23" other than "birthday" of the personal information of gift receiver "Hanako" and selects product information.
Likewise, product information selection section 105 decides whether or not there are features of the receiver information included in the product information corresponding to features of "sex=male" and "age=54" other than "birthday" of the personal information of gift receiver "Dominic" and selects product information. That is, since receiver information #501c of attribute information #412 is "age=20 to 50" and "sex=female", "sex=female" and "age=23" comprising the features of gift receiver "Hanako" correspond to attribute information #412, and therefore product information selection section 105 selects product information #403 including attribute information #412. Likewise, since receiver information #501d of attribute information #413 is "age=50 to 60" and "sex=male", "sex=male" and "age=54" comprising the features of gift receiver "Dominic" correspond to attribute information #413, and product information selection section 105 selects product information #404 including attribute information #413.

On the other hand, when the information about events for which "birthday" comprising a feature of each gift receiver falls within predetermined days from the current date and time is not input, product information selection section 105 does not select the product information (step ST1204).

Next, product information selection section 105 subtracts the date of the measured date and time information from the date of "birthday" in the personal information about all gift receivers and decides whether or not the comparison between the subtraction result and a threshold has been completed or not, that is to say, whether or not there are still remaining people (step ST1205).

When there are still remaining people, product information selection section 105 repeats the processing from step ST1201 to step ST1204.

On the other hand, when there are no remaining people, product information selection section 105 ends the processing.

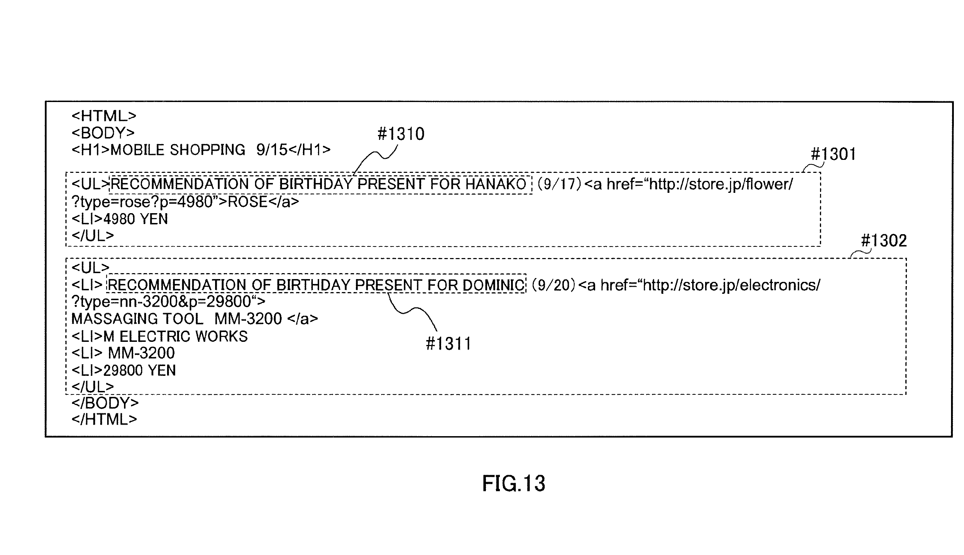

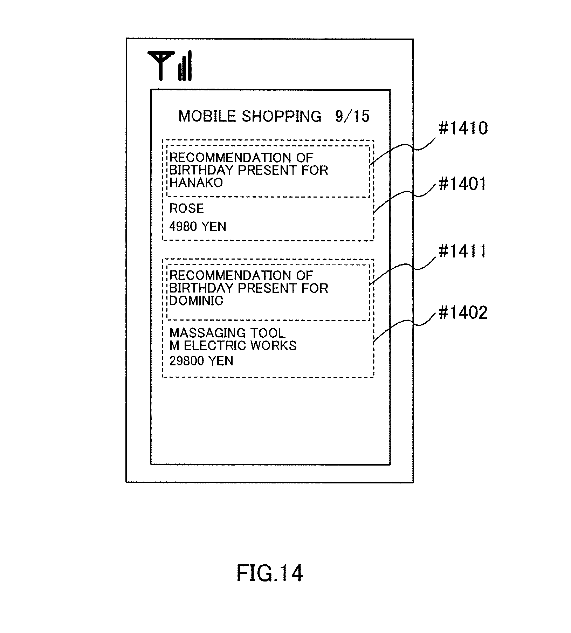

FIG. 13 illustrates product information converted to HTML format data output from product information selection section 105, and FIG.14 illustrates a state in which the product information is displayed on data display section 106.

According to FIG.13, since product information #1301 converted to HTML format data is product information selected based on features in the personal information of gift receiver "Hanako", it includes event information #1310 "Recommendation of birthday present for Hanako." Likewise, since product information #1302 converted to HTML format data is product information selected based on features in the personal information of gift receiver "Dominic", it includes event information #1311 "Recommendation of birthday present for Dominic."

Then, as shown in FIG.14, product information #1301 including event information #1310 is displayed as product information #1401 including event information #1410 on data display section 106. Likewise, product information #1302 including event information #1311 is displayed as product information #1402 including event information #1411 is displayed on data display section 106. The method of arranging product information is the same as that in above described Embodiment 1 and explanations thereof will be omitted.

Thus, in addition to the effects of Embodiment 1, according to Embodiment 2, it is determined whether or not an event is approaching using personal information of each gift receiver, and the product information and the event information are displayed at the top at appropriate timing while the event is approaching, and thereby enabling to reliably prevent the user from forgetting to give a present on the event such as a birthday.

Assuming that, in this Embodiment 2, product information appropriate to a gift receiver whose birthday is approaching is displayed at the top, but the present invention is not limited to this and it is also possible to display, as in the case of Embodiment 1, information that a product is appropriate as a present for product information appropriate to a gift receiver whose birthday is approaching and display the product information in the same order of the received product information.

### (Embodiment 3)

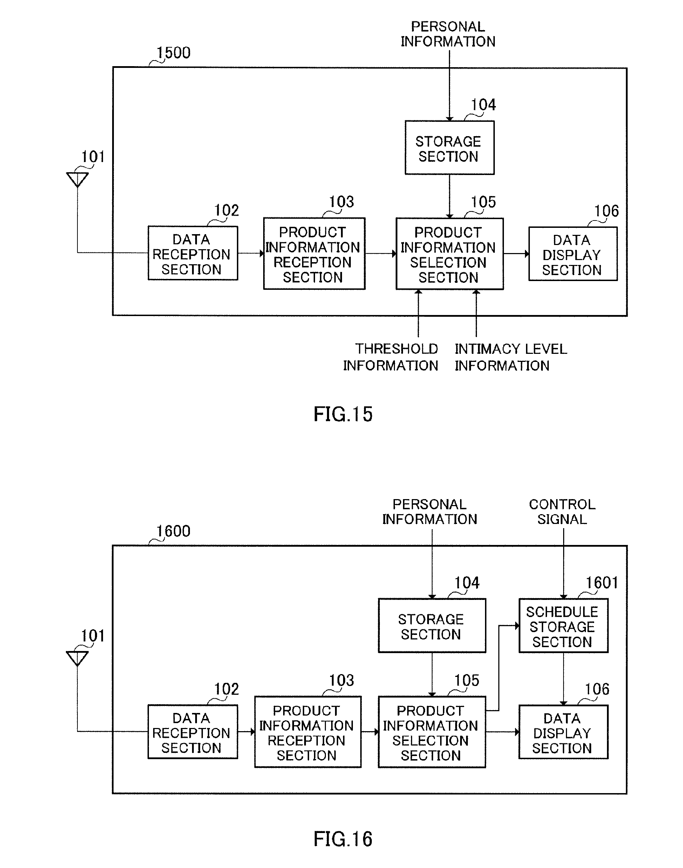

FIG.15 is a block diagram showing the configuration of terminal apparatus 1500 according to Embodiment 3 of the present invention. In FIG.15, the same components as those in FIG.1 are assigned the same reference numerals and explanations thereof will be omitted. Furthermore, since the configuration of the distribution server is the same as that in FIG.2 and explanations thereof will be omitted.

Product information selection section 105 selects product information based on product information input from product information reception section 103, personal information, intimacy level information and information of a threshold input from storage section 104. Here, the "intimacy level information" is information about the frequency with which the user held conversation with the gift receiver in the past or information about the frequency with which transmission/reception by e-mail was conducted with the gift receiver in the past. For example, product information selection section 105 selects receiver information of the sex and age that matches the sex and age of the gift receiver in the personal information whose frequency of conversation is equal to or greater than a threshold and also selects product information including the selected receiver information. Then, product information selection section 105 arranges the selected product information at the top and outputs the product information to data display section 106.

In this way, in addition to the effects of Embodiment 1, according to Embodiment 3, product information appropriate to people or the like with whom the user has a close relationship among people and companies stored as personal information is displayed at the top, so that product information appropriate to people with whom the user does not have so close a relationship as to give a present is not displayed at the top, and thereby it is possible to eliminate the inconvenience of first noticing product information appropriate to people for whom the user has no intention to send a present.

This Embodiment 3 displays product information appropriate to a selected gift receiver at the top, but the present invention is not limited to this, and it is also possible to display, as in the case of Embodiment 1, information that a product is appropriate as a present in the product information appropriate to a selected gift receiver and display product information in the same order of the received product information.

### (Embodiment 4)

FIG. 16 is a block diagram showing the configuration of terminal apparatus 1600 according to Embodiment 4 of the present invention.

Terminal apparatus 1600 according to this Embodiment 4 corresponds to terminal apparatus 100 according to Embodiment 1 shown in FIG.1 with schedule storage section 1601 added thereto as shown in FIG.16. In FIG.16, the same components as those in FIG.1 are assigned the same reference numerals and explanations thereof will be omitted.

Product information selection section 105 selects product information based on product information input from product information reception section 103 and personal information input from storage section 104. For example, product information selection section 105 selects receiver information whose sex and age match the sex and age of the gift receiver of personal information and selects product information including the selected receiver information. Product information selection section 105 then arranges the selected product information at the top and outputs it to data display section 106. Furthermore, product information selection section 105 outputs selection information made up of information of the selected product, information of the gift receiver to whom the selected product is sent and information of "birthday" of the gift receiver to schedule storage section 1601.

Schedule storage section 1601 stores selection information input from product information selection section 105 as schedule book information which is information about a schedule book. Furthermore, when a control signal is input through operation of the user of terminal apparatus 1600 at arbitrary timing, schedule storage section 1601 outputs the stored schedule book information to data display section 106.

Data display section 106 displays product information input from product information selection section 105 in order of the arrangement of product information. Furthermore, data display section 106 displays the schedule book corresponding to the schedule book information input from schedule storage section 1601.

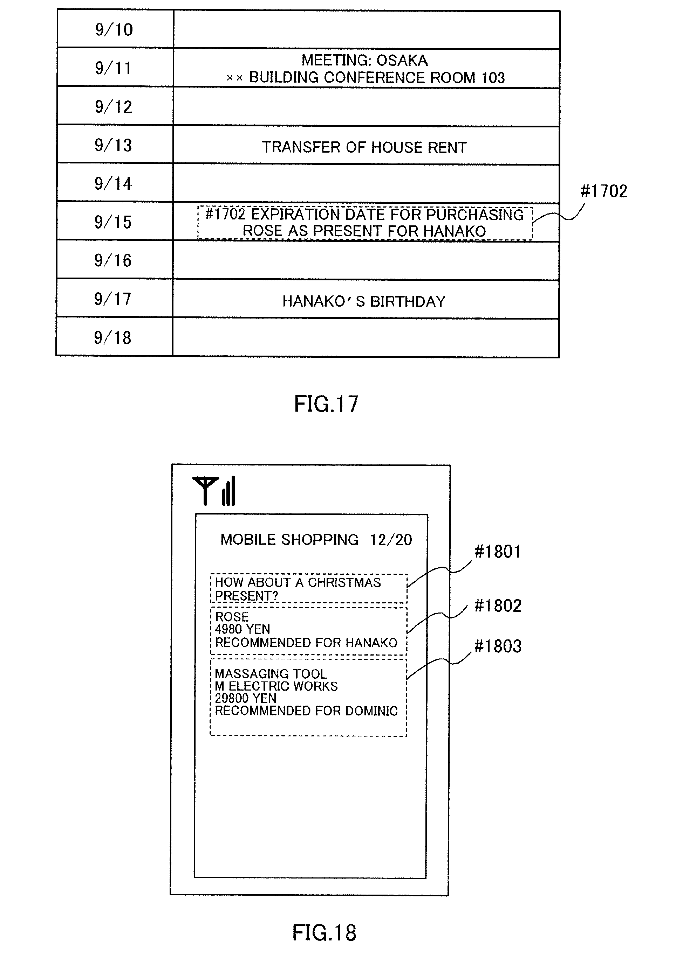

FIG.17 illustrates a state in which the schedule book which is schedule book information is displayed on data display section 106. According to information of "rose" which is information of the selected product in the selection information, information of "Hanako" which is information of the gift receiver to whom the selected product is sent and information of "September 17" which is information of "birthday" of the gift receiver, character information of "an expiration date for purchasing rose as present for Hanako" is written into the schedule book information. At this time, since Hanako's birthday is September 17, character information #1702 of "expiration date for purchasing rose as a present for Hanako" is written on September 15, two days before as the expiration date for purchasing. The character information of "expiration date for purchasing rose as a present for Hanako" written into schedule storage section 1601 is displayed by data display section 106 as shown in FIG.17. By selecting (clicking on) the displayed part of "Expiration date for purchasing rose as a present for Hanako", the user of terminal apparatus 1600 accesses a purchasing screen. "Expiration date for purchasing rose as a present for Hanako" is displayed until September 15 which is the expiration date for purchasing and after September 15 is past, the character information of "Expiration date for purchasing rose as a present for Hanako" is deleted.

Thus, in addition to the effects of Embodiment 1, according to this Embodiment 4, the selected product information is written into address book information, and the product information and expiration date for purchasing selected by calling for the address book information later is displayed, so that it is possible to eliminate the inconvenience of deciding whether or not to purchase it immediately when the selected product information is displayed.

Assuming that, in this Embodiment 4, product information appropriate to a selected gift receiver is displayed at the top, but the present invention is not limited to this, and it is also possible to display, as in the case of Embodiment 1, information that a product is appropriate as a present in the product information appropriate to the selected gift receiver and display the product information in the same order as product information.

### (Embodiment 5)

This Embodiment 5 uses a terminal apparatus having the same configuration as that of the terminal apparatus shown in FIG.10 and uses personal information which replaces "birthday" of the personal information shown in FIG.6 by "Christmas" and uses the same date and time for all. The configuration of the distribution server is the same as that in FIG.2, and therefore explanations thereof will be omitted.

When 7 days is set as a threshold and product information is received on December 20, Christmas comes before December 27, 7 days after, and therefore as shown in FIG.18, data display section 106 displays "How about a Christmas present?" as event information #1801 at the top and displays product information #1802 and product information #1803 next to information #1801 of the event.

In this way, in addition to the effects of Embodiment 1, according to this Embodiment 5, it is determined whether or not an event such as Christmas which is common to all gift receivers is approaching, and, when the common event is approaching, product information as well as information about the event is displayed at the top, so that it is possible to prevent the user from forgetting to give a present to all gift receivers at a common event such as Christmas.

Embodiment 1 though Embodiment 5 have described the case where "birthday" or "Christmas" is used as a specific day and time in personal information, but the present invention is not limited to this, and it is also possible to use a day and time of an arbitrary event such as wedding anniversary.
Furthermore, Embodiment 1 through Embodiment 5 compare among a plurality of adequacy levels of adequacy level information, and display product information including adequacy level information of the higher adequacy level at the top, but the present invention is not limited to this, and it is also possible to set a threshold to be compared with the adequacy level and display product information including adequacy level information whose adequacy level is equal to or greater than the threshold at the top. Furthermore, Embodiment 1 through Embodiment 5 express product information as XML format data, but the present invention is not limited to this, and it is also possible to express product information as arbitrary format data. Furthermore, Embodiment 1 through Embodiment 5 use an HTML language as a display description format, but the present invention is not limited to this, and it is also possible to describe the product information according to an arbitrary description scheme. Furthermore, Embodiment 1 through Embodiment 5 use "ITEM" and "META" or the like as tag names of XML description, but the present invention is not limited to this, and it is also possible to put arbitrary tag names. Furthermore, Embodiment 1 through Embodiment 5 can also use attribute information including arbitrary items other than "sex", "age", "genre" and "adequacy level."

### (Embodiment 6)

### [Structure of contents providing system]

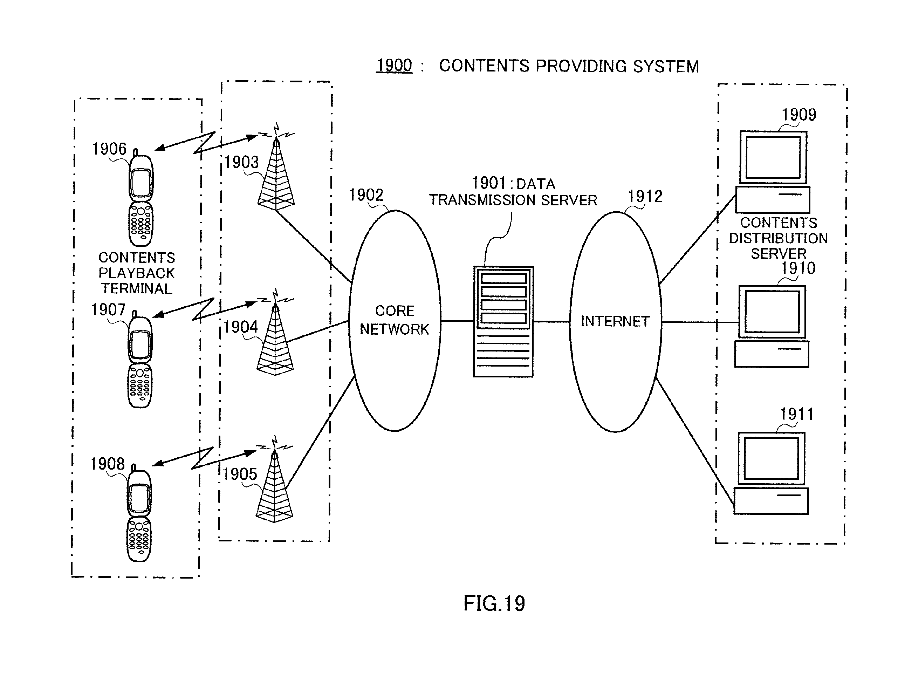

As shown in FIG.19, contents providing system 1900 according to Embodiment 6 of the present invention is constructed comprising of data transmission server (broadcasting server) 1901 that transmits data, a number of contents playback terminals 1906 to 1908, and further comprising of a number of contents distribution server s 1909 to 1911 that deliver contents to data transmission server 1901 via Internet 1912 and base stations 1903 to 1905 that receive data from data transmission server 1901 via core network 1902 and transmit (distribute) this data to contents playback terminals 1906 to 1908.

Data transmission server 1901 distributes broadcast data to a number of contents playback terminals 1906 to 1908. The data distributed here includes, for example, audio contents, video contents and text-based contents. Control information is added to these contents.

Control information includes attribute information associated with each content, contents playback information and control rule information (rule.xml) or the like. The contents playback information is information for performing playback control of contents such as a contents playback time and playback display location. The control rule information is information for performing control of extracting search information according to behavioral characteristics of the user. Here, the "behavioral characteristics of the user" are used to mean traits of actions performed according to the user's need in locations and areas such as a place, region, city, building, route requested by the user. Examples of behavioral characteristics of the user include the user's behavior of purchasing a product in a place or area the user frequently visits, or on the contrary, the user' s behavior of purchasing a product via the Internet in a place or area the user does not visit, the user's behavior of visiting a desired place or area and the user' s behavior of searching for contents in a desired place or area.

The attribute information includes location information. Here, the "location information" is information including locations of a place, region, city, building, station on the route or the like or locations to identify them. For example, information including at least longitude and latitude is used as the location information. Details of such control information will be described later.

### [Structure of contents playback terminal]

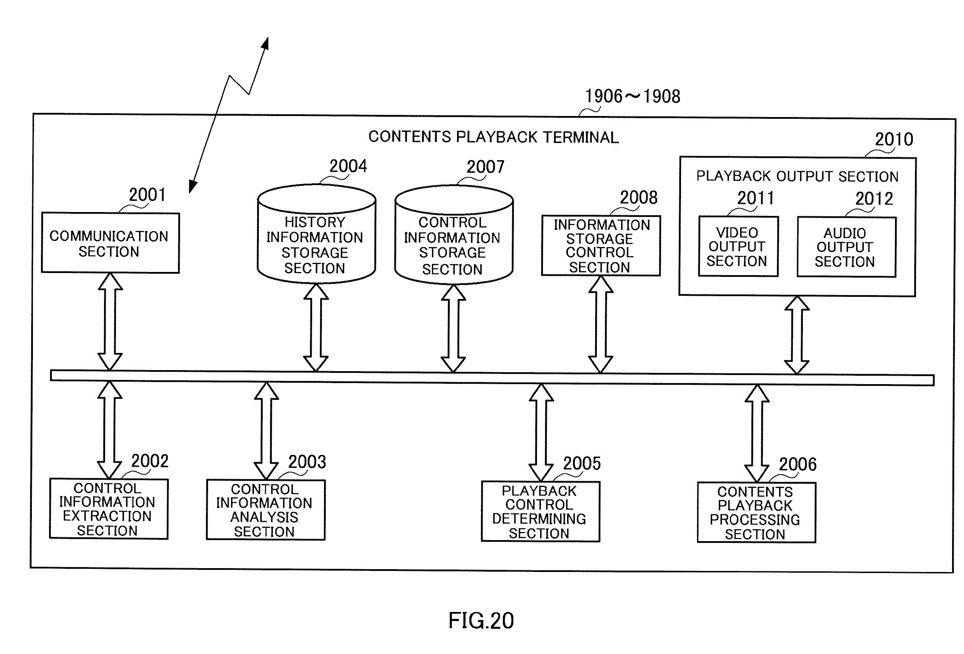

Contents playback terminals 1906 to 1908 are cellular phones according to Embodiment 6. As shown in FIG.20, contents playback terminals 1906 to 1908 are each provided with a communication section that receives contents, a storage section that stores history information including location information, a search information extraction section that extracts search information according to behavioral characteristics of the user from location information stored in the history information, a contents selection section that preferentially selects new contents corresponding to the search information and a playback section that plays back new contents.

Here, in Embodiment 1, the communication section of contents playback terminal 1906 to 1908 is constructed of communication section 2001. Communication section 2001 basically transmits/receives data and receives data including contents.

The storage section is constructed comprising of history information storage section 2004, control information storage section 2007 and information storage control section 2008.

History information storage section 2004 stores history information of contents including location information searched according to behavioral characteristics of the user as attribute information. For history information storage section 2004, memories incorporated in contents playback terminals 1906 to 1908, more specifically, any one of electrically erasable non-volatile memory (EEPROM, Flash Memory or the like), volatile readable/writable memory (SRAM and DRAM) and magnetic memory (Hard Disk) can be practically used. Furthermore, for history information storage section 2004, an outside storage apparatus freely attachable/detachable to/from contents playback terminals 1906 to 1908, for example, card type memory, stick type memory can be practically used. Furthermore, a storage apparatus of a server on a network constructed of a wireless network or cable network can be used as history information storage section 2004.

Control information storage section 2007 stores control information included in contents. For control information storage section 2007, any one of a built-in memory and outside storage apparatus can be practically used as history information storage section 2004. Information storage control section 2008 performs control of storing the aforementioned history information in history information storage section 2004.

The search information extraction section is provided with control information extraction section 2002 and control information analysis section 2003. Control information extraction section 2002 analyzes data received by communication section 2001 and extracts control information included in the data, that is, contents playback information and control rule information based on this analysis result. These contents playback information and control rule information are stored in control information storage section 2007. Control information analysis section 2003 analyzes control information extracted by control information extraction section 2002 or control information stored in control information storage section 2007 and finally extracts contents search information according to behavioral characteristics of the user based on this analysis result and location information included in the history information.

The contents selection section is constructed of playback control determining section 2005. Playback control determining section 2005 selects contents according to behavioral characteristics of the user based on the search information and determines contents to be preferentially played back.

The playback section is provided with contents playback processing section 2006 and playback output section 2010. Contents playback processing section 2006 performs processing for playing back contents selected and determined to be played back according to the search information by playback control determining section 2005. More specifically, contents playback processing section 2006 performs playback processing of outputting video contents as actual video image, playback processing of outputting audio contents as actual voice and playback processing of outputting text-based contents as actual video image(or voice).

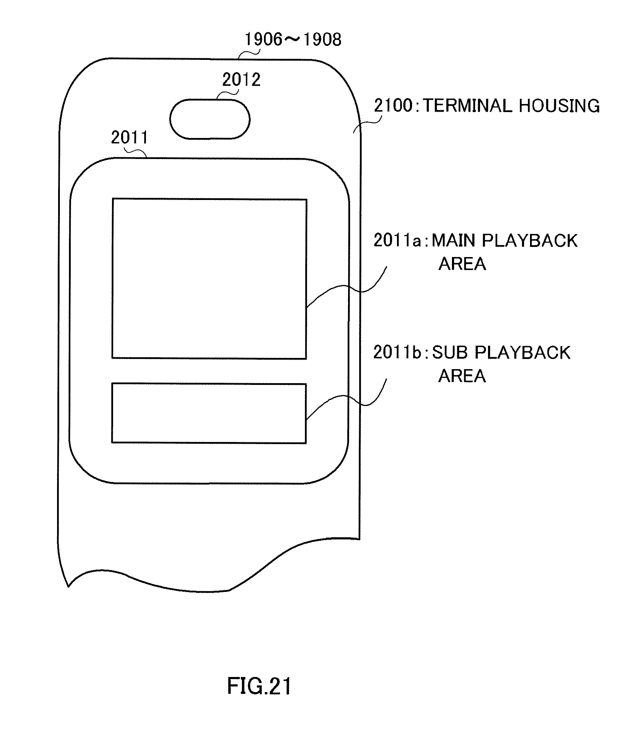

As shown in FIG.20 and FIG.21, playback output section 2010 is provided with video output section 2011 disposed at an easily viewable location for the user of terminal housing 2100 of contents playback terminal 1906 to 1908 and audio output section 2012 disposed at a location where voice is audible appropriately as a cellular phone. In Embodiment 6, main playback area 2011a that displays video which plays back video contents is disposed in the upper part and sub playback area 2011b that plays back and displays text-based contents, or more specifically, contents such as advertisement distributed from contents distribution server s 1909 to 1911 as characters and video image is disposed in the lower part of video output section 2011 in FIG.21. For video output section 2011A, liquid crystal display screen (LCD) or organic electroluminescence (EL) screen can be practically used. Audio output section 2012 is a speaker, for example.

### [Contents playback method]

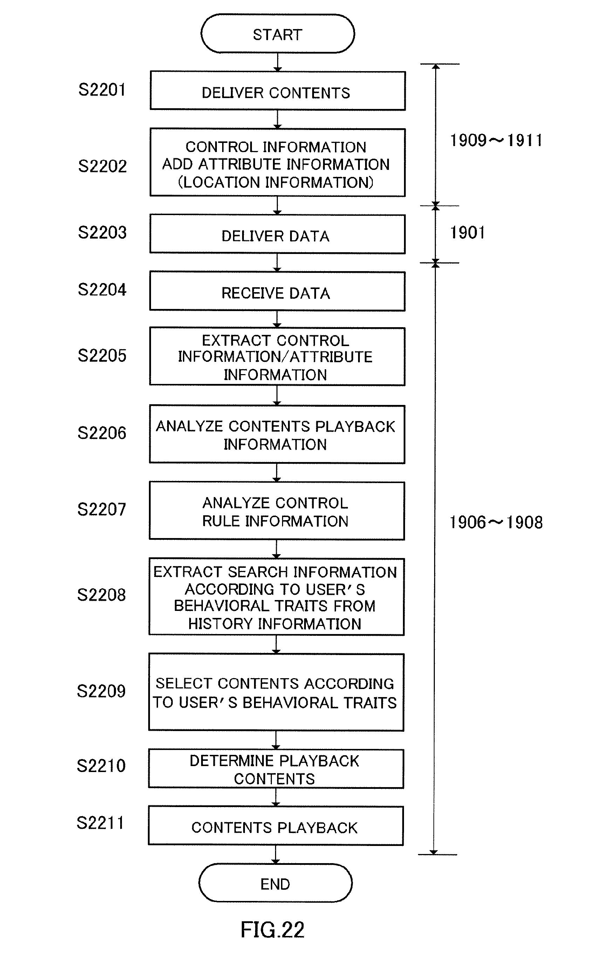

Next, the contents playback method in aforementioned contents providing system 1900 shown in FIG.19 will be explained using FIG.22.

First, as shown in step ST2201, contents distribution server s 1909 to 1911 deliver text-based contents such as video contents, audio contents and advertisements to data transmission server 1901 via Internet 1912.

As shown in step ST2202, data transmission server 1901 adds attribute information and control information to contents distributed from contents distribution server s 1909 to 1911 and generates data to be distributed. In Embodiment 6, attribute information added to contents includes location information including information of longitude and latitude.

As shown in step ST2203, data including contents is distributed from data transmission server 1901, this data is transmitted to base stations 1903 to 1905 via core network 1902 and further distributed from base stations 1903 to 1905 to a number of contents playback terminals 1906 to 1908 as broadcast data through radio signals.

As shown in step ST2204, in contents playback terminals 1906 to 1908, the distributed data is received by communication section 2001 (see FIG.20). The received data includes a number of contents, and attribute information and contents control information associated with the contents added by data transmission server 1901.

As shown in step ST2205, control information extraction section 2002 extracts the control information, that is, contents playback information and control rule information and location information of attribute information from the received data.

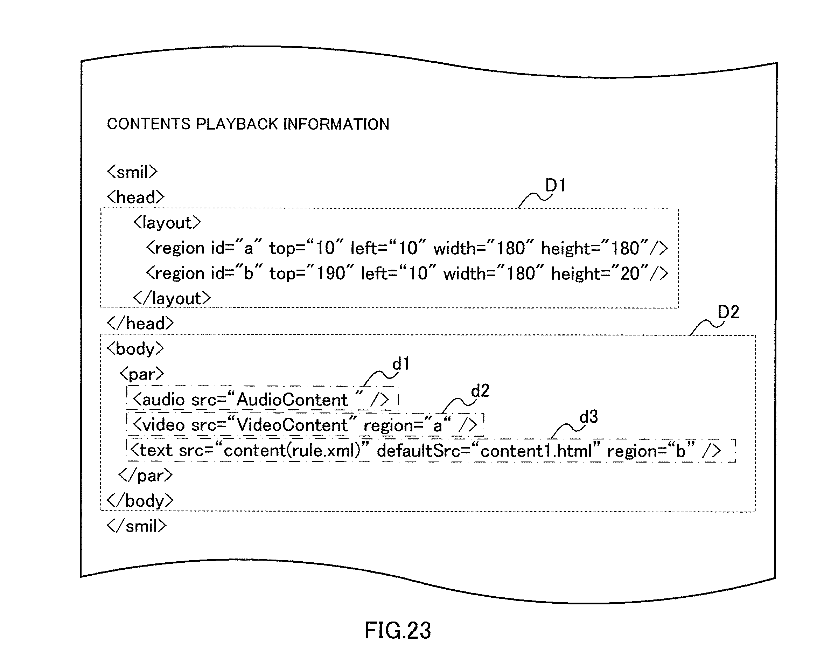

As shown in step ST2206, control information analysis section 2003 analyzes the contents playback information. As shown in FIG.23, the contents playback information is described in, for example, SMIL (Synchronized Multimedia Integration Language) out of descriptive languages for creating multimedia contents.

The contents playback information is information about playback control such as a playback display position and playback time of each content. Of the contents playback information, playback information D1 is information about the respective playback display positions of video contents and text-based contents. Here, information about playback display positions "a" and "b" is included. Playback display position "a" is defined by "180 pixels" high from the "10th pixel" in the top and "180 pixels" wide from the "10th pixel" from the left, and corresponds to main playback area 2011a of video output section 2011 shown in FIG.21. Playback display position "b" is defined by "20 pixels" high from the "190th pixel" in the top and "180 pixels" wide from the "10th pixel" from the left, and corresponds to sub playback area 2011b of video output section 2011 shown in FIG.21.

Playback information D2 of the contents playback information includes information d1 for playing back the audio contents in audio output section 2012 of playback output section 2010, and information d2 for playing back video contents in playback display position "a" (main playback area 2011a).

Furthermore, playback information D2 includes information d3 for playing back the contents selected according to the control rule information (rule.xml) in playback display position "b" (sub playback area 2011b) referring to this control rule information. In Embodiment 6, text-based contents such as advertisement are mainly played back at playback display position "b." In addition, when contents played back according to control rule information are not selected (when search information according to behavioral characteristics of the user is not extracted), information d3 is designed to play back the text-based contents (content1.html) in playback display position "b" as a default setting.

As shown in step ST2207, control information analysis section 2003 analyzes the control rule information. In Embodiment 6, history information storage section 2004 shown in FIG.20 stores at least product purchase history information as history information according to behavioral characteristics of the user. In Embodiment 6, the control rule information is information for controlling processes of extracting location information of the product purchasing place included in the history information of the product purchased last time from this product purchase history information, preferentially selecting and playing back contents including the purchasing place or location information of neighborhood thereof as attribute information using this location information as search information.

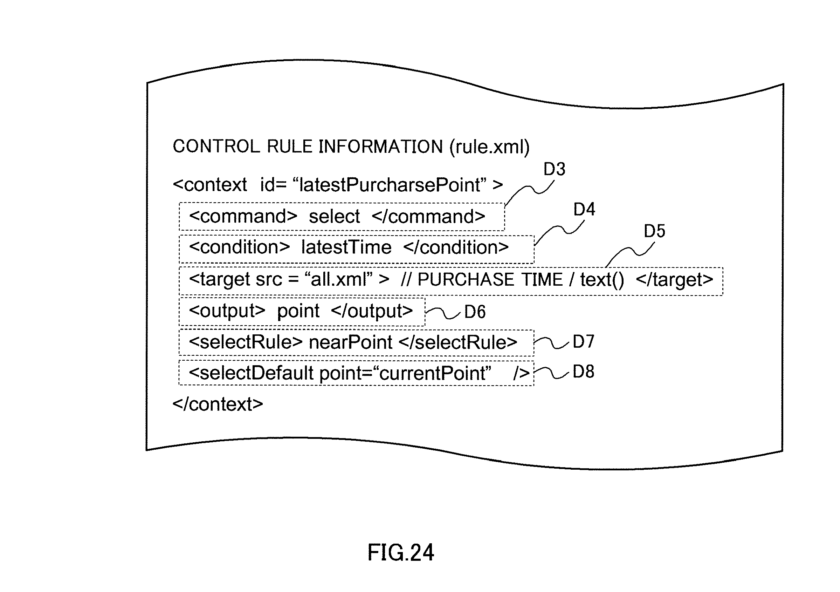

As shown in FIG.24, the control rule information specifies "last product purchasing location (place at which the product was purchased most recently: latest Purchase Point)" as context. Based on this specification, the control rule information extracts (selects) based on control information D3 the last product purchasing time (latest Time) based on control information D4 from all the product purchase history information (all.xml) stored in history information storage section 2004 shown in FIG.20 based on control information D5 and extracts this extracted product purchase location (point) based on control information D6 as the output.
This product purchase location is location information extracted according to the user' s need for purchasing the product, and according to the characteristic that the product was purchased at a place, outlet store, region or the like of the user's preferences irrespective of whether it is the current location or not and is "search information according to behavioral characteristics of the user " as shown in step ST2208.

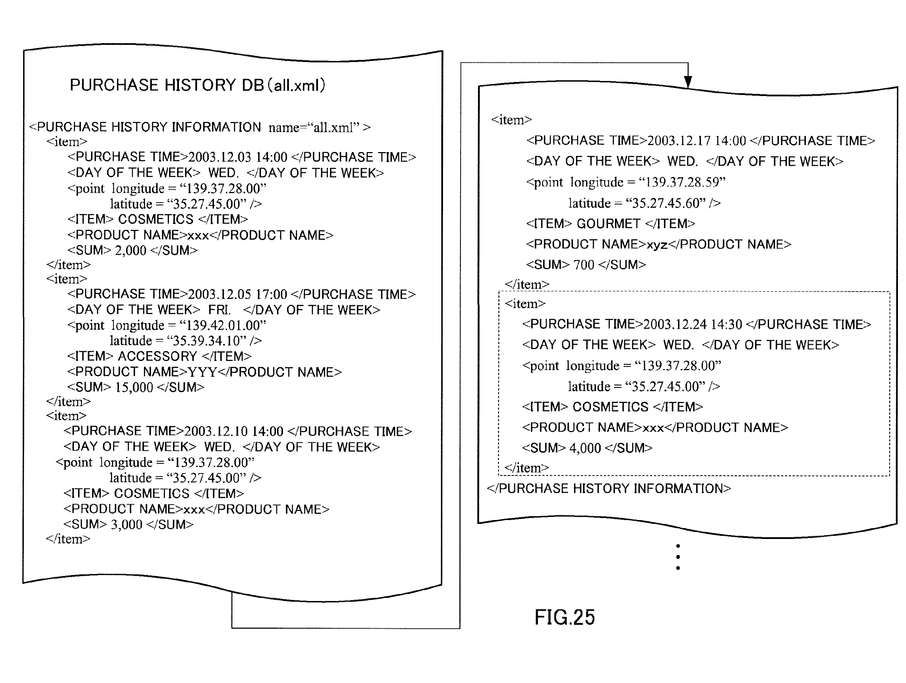

The product purchase history information stored in history information storage section 2004 is stored for each purchase product item as shown in FIG.25 and each purchase product item stores, for example, information about "purchase time", "purchase day of the week", "purchase location" which is location information expressed with longitude and latitude, "product item", "product name" and "product purchasing price."

In the aforementioned control rule information shown in FIG.24, when the product purchase location, that is, search information (location information) according to behavioral characteristics of the user is extracted based on control information D6, as shown in step ST2209, based on control information D7, playback control determining section 2005 extracts the location information nearest to the location information (near Point) of the search information according to behavioral characteristics of the user from the attribute information (attribute.xml) and selects contents corresponding to this extracted location information. In this selection, only one content may be selected or contents may be given priority in ascending order of proximity to the location information of the search information and selected sequentially.

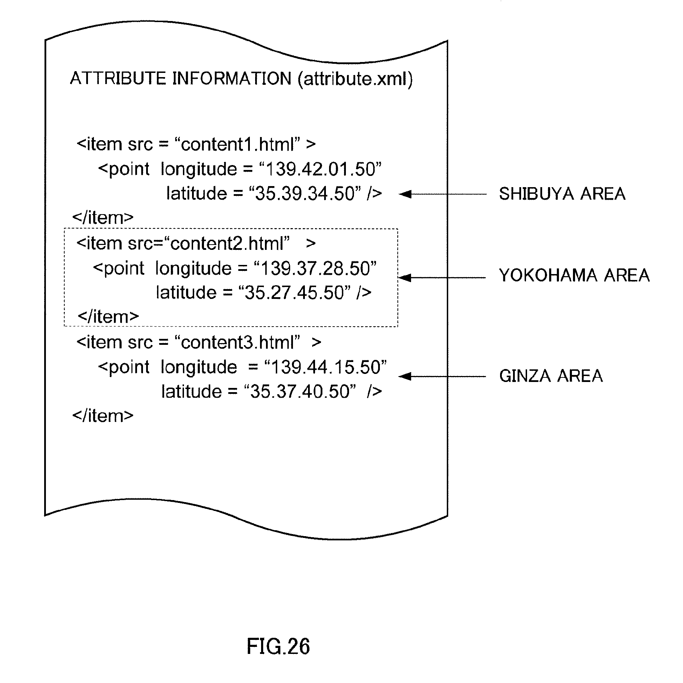

The attribute information added to text-based contents of data includes location information expressed with longitude and latitude as shown in FIG. 26, for example. The attribute information of the content (content1.html) displayed first includes location information where this content relates to the "Shibuya area." The attribute information of the content (content2.html) displayed next includes location information where this content relates to the "Yokohama area." The attribute information of the content (content3.html) displayed finally includes location information where this content relates to the "Ginza area."

In Embodiment 6, target information that the purchase time of the last purchased product (item enclosed by a dotted line in FIG.25) is "14:30, December 24, 2003" is extracted from the product purchase history information shown in FIG.25 stored in history information storage section 2004, and purchase location information "longitude: 139° 37' 28.00", latitude: 35° 27' 45.00" included in this purchase product item is extracted, and, when the location information of the nearest area is searched using this as location information, it is possible to select text-based contents (content2.html) related to the "Yokohama area" from the attribute information of the contents shown in FIG.26.

When location information that matches the search information according to behavioral characteristics of the user has not been extracted, contents are selected using the current location (current Point) as search information based on the default setting of control information D8 of the control rule information shown in FIG.24.

Furthermore, it is also possible to store the control rule information shown in FIG.24 in control information storage section 2007 shown in FIG.20 and invoke prestored control rule information from control information storage section 2007 when the "last product purchase location" of the context of the control rule information is specified.

As shown in step ST2210, when text-based contents (content2.html) to be played back are determined, communication section 2001 selects contents to be received and preferentially selects contents related to the "Yokohama area" according to behavioral characteristics of the user. The selected contents are subjected to processing necessary for playback by contents playback processing section 2006. After this, the processed contents are played back by playback output section 2010 as shown in step ST2211. The video contents are played back as video in main playback area 2011a of video output section 2011 shown in FIG.21, and audio contents are played back as voice by audio output section 2012. Then, text-based contents (content2.html), in other words, contents related to the "Yokohama area" searched according to behavioral characteristics of the user are preferentially played back as video in sub playback area 2011b.

Thus, according to Embodiment 6, search information according to behavioral characteristics of the user is extracted from location information included in history information, and new contents corresponding to this search information are preferentially selected and played back, so that it is possible to select, receive and play back new contents according to behavioral characteristics of the user without registering the user's personal information in the contents source. Therefore, it is possible to easily search and playback contents according to the user's need, eliminate diversion or outflow of the user' s personal information and reliably protect the user's privacy.

### (Embodiment 7)

The contents playback method, contents playback terminals 1906 to 1908 and contents providing system 1900 according to Embodiment 7 of the present invention extract the user' s action area based on search information according to behavioral characteristics of the user and preferentially selects and plays back contents related to this action area.

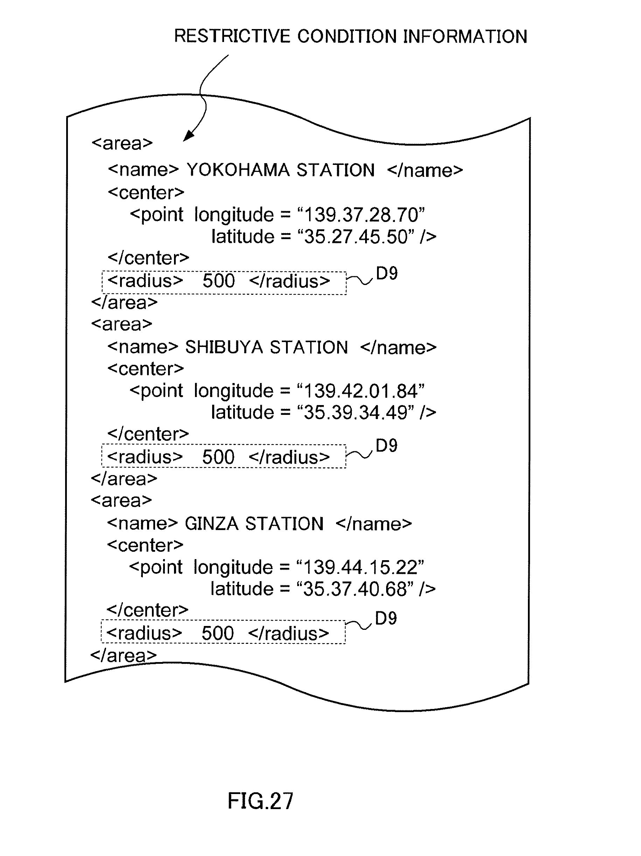

As shown in FIG.27, contents playback terminals 1906 to 1908 according to Embodiment 7 include area radius information (radius) D9 in control rule information. This area radius information D9 is prestored in, for example, control information storage section 2007 shown in FIG.20 and stored as fixed information or as variable information which takes a default value at the beginning and can be changed later by the user as appropriate. In Embodiment 7, area radius information D9 is set as information described in radius and set to "radius: 500 m." Furthermore, area radius information D9 can also be set as information described in diameter.

As explained in aforementioned Embodiment 6, it is possible to extract "location information" according to behavioral characteristics of the user , and thereby it is possible to extract this "location information" as "center location information" and extract "action area information" having an area based on this "center location information" and "500 m" of area radius information D9. For example, as shown in FIG.27, when the center location information of "Yokohama Station" is assumed to be "longitude: 139° 37' 28.70", longitude: 35° 27' 45.50"", the range of a circle described with radius "500 m" from this center location can be extracted as "action area information." This "action area information" is "search information" according to behavioral characteristics of the user. It is possible to preferentially select and playback contents related to the inside of the action area based on this search information.

According to Embodiment 7, it is possible to extract search information including action area information for which the range of an action area is set based on the center location information and area radius information extracted from the location information, so that new contents can be preferentially selected and played back related to the user's action area.

### (Embodiment 8)

The contents playback method, contents playback terminals 1906 to 1908 and contents providing system 1900 according to this Embodiment 8 of the present invention will be explained with an example where "action area information" which is the search information according to behavioral characteristics of the user explained in Embodiment 7 is extracted using another method.

Contents playback terminals 1906 to 1908 according to Embodiment 8 replace area radius information D9 of the control rule information shown in FIG.27 by "distance" of, for example, 1/2 of two neighboring pieces of "center location information" and extract "action area information" based on this "distance" and "center location information."

For example, based on the "distance" of 1/2 of the distance between the center location information (first center location information) of "Shibuya Station" shown in FIG.27 and center location information (second center location information) of "Ginza Station" close to center location information "Shibuya Station", it is possible to extract "action area information" using "Shibuya Station" as center location information and assume this "action area information" to be "search information."

According to Embodiment 8, it is possible to extract "action area information" based on a number of pieces of center location information, so that search information according to behavioral characteristics of the user can be automatically extracted, and contents distributed in the action area based on this search information can be preferentially selected and played back.

### (Embodiment 9)

The contents playbackmethod, contents playback terminals 1906 to 1908 and contents providing system 1900 according to this Embodiment 9 will be explained with an example where the method of extracting search information from product purchase history information explained in aforementioned Embodiment 6 is replaced.

Contents playback terminals 1906 to 1908 according to Embodiment 9 can extract search information according to behavioral characteristics of the user based on location information of a purchasing place corresponding to a maximum number of purchased products of product purchase history information, and select and play back contents according to behavioral characteristics of the user based on this search information.

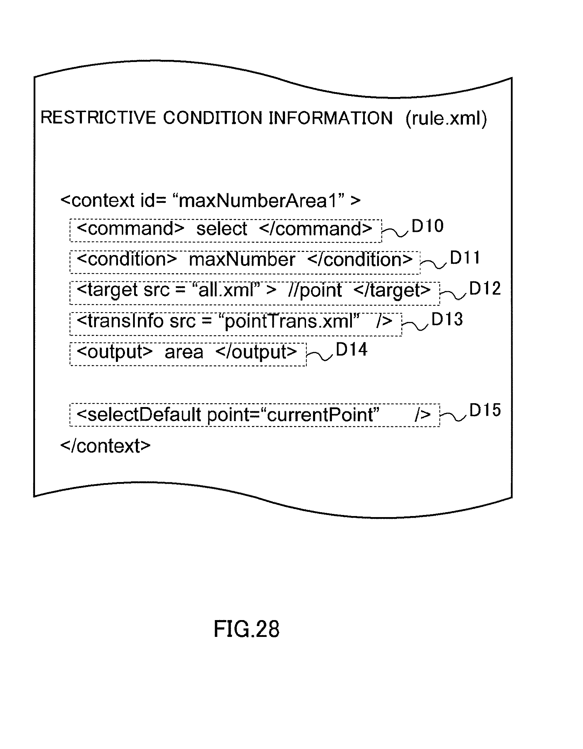

As shown in FIG.28, the control rule information indicates "purchasing place where a maximum number of purchased products were purchased (max Number Area 1)" as a context first.
The control rule information extracts all purchasing place (point) information from all product purchase history information stored in history information storage section 2004 shown in aforementioned FIG.20 based on control information D12, converts it to "area information" based on area conversion information (point Trans.xml) shown in control information D13 and extracts (selects) a (max Number) area corresponding to a maximum number based on control information D11, in other words, area where a maximum number of products were purchased based on control information D10. Contents corresponding to the extracted area information are played back preferentially.
Since the "Yokohama area" corresponding to the maximum number of products purchased is indicated here, content (content2.html) is selected.

When the area information that matches the search information according to behavioral characteristics of the user is not extracted, contents are selected assuming the area at the current location (current Point) as search information based on the default setting of control information D15. Moreover, when contents related to the area at the current location are not distributed, content (content1.html) is selected based on playback information D3 in FIG.23.

According to Embodiment 9, search information according to behavioral characteristics of the user is extracted from the location information of a purchasing place corresponding to a maximum number of products purchased in the product purchase history information and new contents corresponding to this search information are preferentially selected and played back, so that it is possible to select and play back new contents according to behavioral characteristics of the user without registering the user's personal information in the contents source.

### (Embodiment 10)

Contents playback method, contents playback terminals 1906 to 1908 and contents providing system 1900 according to this Embodiment 10 will be explained with an example where location information included in received information is assumed to be area center location information without using the area information (area conversion rule) explained in aforementioned Embodiment 9.

Contents playback terminals 1906 to 1908 according to Embodiment 10 can extract search information including an area according to behavioral characteristics of the user based on the location information of a purchasing place corresponding to a maximum number of products purchased in product purchase history information and select and play back contents according to behavioral characteristics of the user based on this search information.

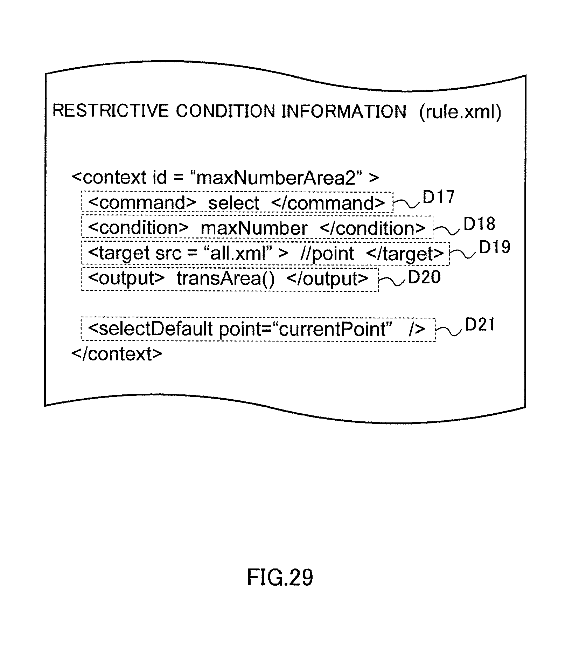

As shown in FIG.29, the control rule information specifies a "purchase area corresponding to a maximum number of products purchased (max Number Area 2)" as a context. Based on this specification, the control rule information extracts all purchasing place (point) information from all product purchase history information stored in history information storage section 2004 shown in aforementioned FIG.20 based on control information D19, converts it to area information based on control information (transArea ()) D20 and extracts an action area corresponding to a maximum number based on control information D18. Control information (transArea()) D20 here indicates that the contents attribute information shown in FIG.26 is used as the area information. This attribute information assumes the location information related to each content to be the center location information of the area. The area radius information may be obtained using a preset value, for example, 500 m, or from a number of pieces of center location information as described in Embodiment 8. This "action area information" is "search information according to behavioral characteristics of the user."

When the area information that matches the search information according to behavioral characteristics of the user is not extracted, contents are selected assuming the area of the current location to be search information based on the default setting of control information D21. Moreover, when contents related to the area at of current location are not distributed, content (content1.html) is selected based on playback information d3 in FIG.23.

According to Embodiment 10, search information according to behavioral characteristics of the user is extracted from the location information at a purchasing place corresponding to a maximum number of purchased products in the product purchase history information and new contents corresponding to this search information are preferentially selected and played back, so that it is possible to select, receive and play back new contents according to behavioral characteristics of the user without registering the user's personal information in the contents source.

(Embodiment 11) The contents playback method, contents playback terminals 1906 to 1908 and contents providing system 1900 according to Embodiment 11 of the present invention can extract search information according to behavioral characteristics of the user based on location information about a purchasing place of a product purchased at a maximum purchasing price in the product purchase history information shown in aforementioned FIG.25, select and play back contents according to behavioral characteristics of the user based on this search information.
As explained in aforementioned Embodiment 7, it is also possible to extract area information based on location information about a purchasing place of a product purchased at a maximum purchasing price and extract search information according to behavioral characteristics of the user.

Note that a conventional advertisement providing system and advertisement providing method propose an advertisement providing system and advertisement providing method for delivering advertisement information in consideration of each consumer' s (user's) browsing time, browsing place of advertisements, tastes and preferences with pinpoint accuracy and transmitting the consumer's purchasing request to an advertiser. This advertisement distribute system is constructed of a communication dealer terminal, a consumer terminal and a company terminal.

The communication dealer terminal stores advertisement information, consumer's location information and tastes and preferences information and selects advertisement information based on the location information, tastes and preferences information and browsing time. This selected advertisement information is transmitted from the communication dealer terminal to the corresponding consumer terminal.

The consumer terminal transmits the consumer's (consumer terminal) location information to the communication dealer terminal. The consumer terminal receives the advertisement information transmitted from the communication dealer terminal and displays this advertisement information.
The consumer selects a product that matches the own tastes and preferences from the advertisement information and transmits reservation request information of this product or the like from the consumer terminal to the communication dealer terminal.

The company terminal transmits advertisement information to the communication dealer terminal. This advertisement information includes information about the attribute of the targeted consumer, effective location and effective time for distributing the advertisement information.
Furthermore, the company terminal receives the reservation request information transmitted from the consumer terminal via the communication dealer terminal. The company can sell a product or so forth that matches consumers' tastes and preferences based on such reservation request information in response to the consumers' requests.

Such a conventional advertisement providing system and advertisement providing method distribute advertisement information to the consumer's current browsing place in a pin-point manner based on the consumer's location information transmitted from the consumer terminal to the communication dealer terminal. However, such distributed advertisement information is not always optimum advertisement information for the consumer at the current browsing place. For example, the consumer's browsing place is a local office at the present, but when the consumer wants to purchase a product later at a place different from this local office where the consumer relatively frequently visits, the consumer requires to browse advertisement information related to a product the consumer wants to purchase at the place the consumer frequently visits.

Moreover, when using the conventional advertisement providing system and advertisement providing method, it is necessary to transmit personal information including the consumer's location information, tastes and preferences information to the communication dealer terminal or register such information in the communication dealer terminal. This not only requires troublesome registration procedures but also may cause diversion or outflow of personal information, and the protection of privacy cannot be sufficient. The contents playback method, contents playback terminal and contents providing system according to Embodiment 6 to Embodiment 11 can solve these conventional problems.

The present invention is not limited to aforementioned Embodiment 6 to Embodiment 11. For example, the present invention may also be adapted so as to load (extract search information according to behavioral characteristics of the user) area information distributed at a service site or the like available in a highway service area, or more specifically search information including at least location information and area radius information as shown in aforementioned FIG.27 into information storage control section 2008 shown in FIG.20 of contents playback terminal 1906 to 1908, select and play back contents based on this search information. Furthermore, the present invention can store location information of attribute information as history information in control information storage section 2007 shown in FIG.20 of contents playback terminal 1906 to 1908. Furthermore, with regard to extraction of a maximum number of products purchased or the like, it is also possible to specify a product by specifying the number of products purchased, purchasing sum or total purchasing sum about a specific product and extract location information.

### (Embodiment 12)

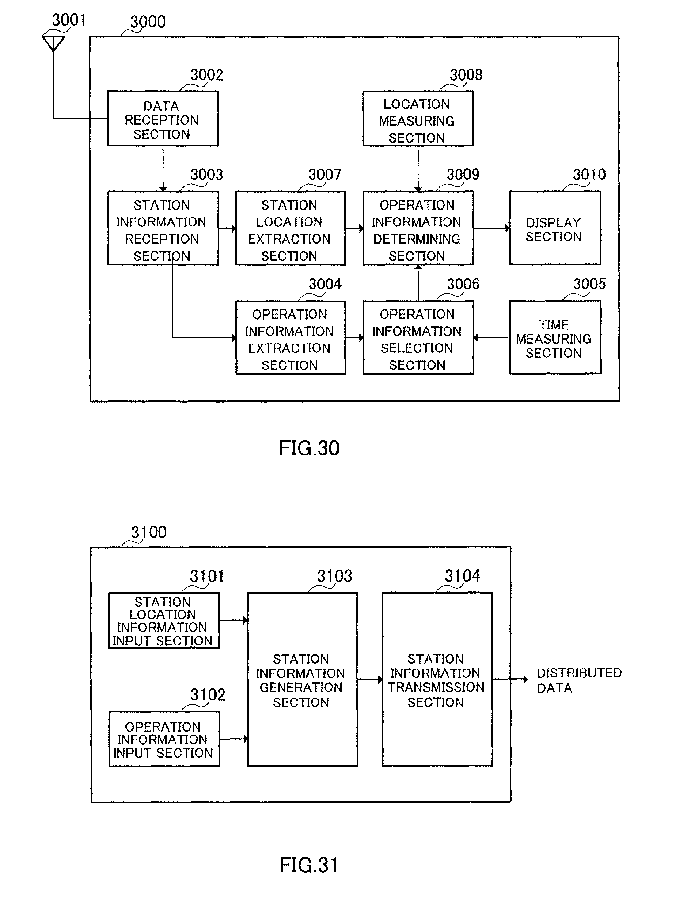

FIG.30 is a block diagram showing the configuration of terminal apparatus 3000 according to Embodiment 12 of the present invention.

Data reception section 3002 down-converts a received signal received through antenna 3001 from a radio frequency to a baseband frequency and outputs it to station information reception section 3003.

Station information reception section 3003 extracts station information from the received signal input from data reception section 3002 and outputs it to operation information extraction section 3004 and station location extraction section 3007. Here, the station information includes station location information (boarding location information) which is information indicating the location of each station and operation information which is information indicating the operation situation of each train. The station information may also include information corresponding to station location information indicating the location of a subway station other the train station or bus stop and information corresponding to operation information indicating an operation situation of subway or buses other than trains.

Operation information extraction section 3004 extracts operation information from the station information input from station information reception section 3003 and outputs it to operation information selection section 3006.

Time measuring section 3005 measures the current time and outputs the measured time information which is information of the measured time to operation information selection section 3006.

Operation information selection section 3006 compares the departure time or arrival time of each train of operation information for each station input from operation information extraction section 3004 with the time in the measured time information input from time measuring section 3005. Then, operation information selection section 3006 selects operation information of departure times or arrival times within a time period from the current time until a predetermined time later and outputs only the selected operation information to operation information determining section 3009.

Station location extraction section 3007 extracts station location information from the station information input from station information reception section 3003 and outputs it to operation information determining section 3009.

Location measuring section 3008 measures the current location of terminal apparatus 3000 through GPS, for example, and outputs the current location information which is information of the measured current location to operation information determining section 3009.

Operation information determining section 3009 compares the location of the station of the station location information input from station location extraction section 3007 with the current location of the current location information input from location measuring section 3008. Then, operation information determining section 3009 selects a station located within a predetermined distance from the current location. Furthermore, operation information determining section 3009 selects only operation information including the information of the selected station out of the operation information input from operation information selection section 3006 and outputs the selected operation information to display section 3010.

Display section 3010 displays the operation information input from operation information determining section 3009.

Next, the configuration of distribution server 3100 will be explained using FIG.31. FIG.31 is a block diagram showing the configuration of distribution server 3100.

Station location information input section 3101 generates station location information from data indicating the location of each station input from the outside and outputs it to station information generation section 3103.

Operation information input section 3102 generates operation information from data indicating the operation situation of a train input from the outside and outputs it to station information generation section 3103. At this time, when the train is delayed due to an accident or the like, operation information is generated based on the departure time or arrival time in consideration of the delay time.

Station information generation section 3103 which is a transmission signal generation section generates station information including the station location information input from station location information input section 3101 and the operation information input from operation information input section 3102 and outputs the generated station location information to station information transmission section 3104.

Station information transmission section 3104 outputs the station information input from station information generation section 3103 as distributed data.

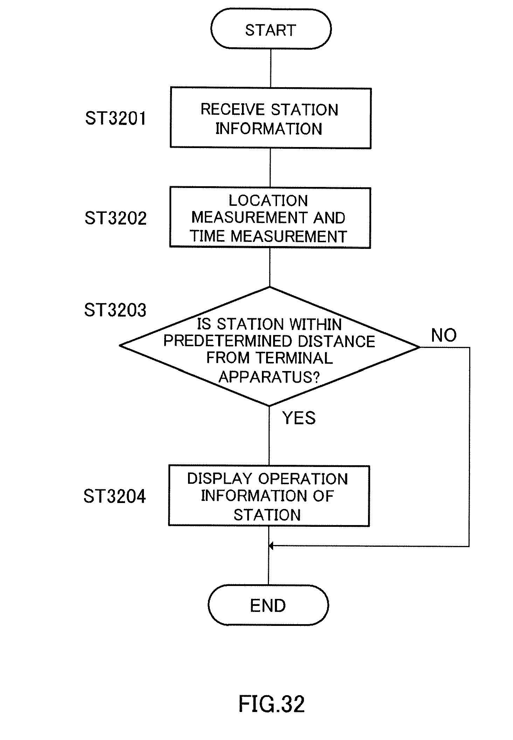

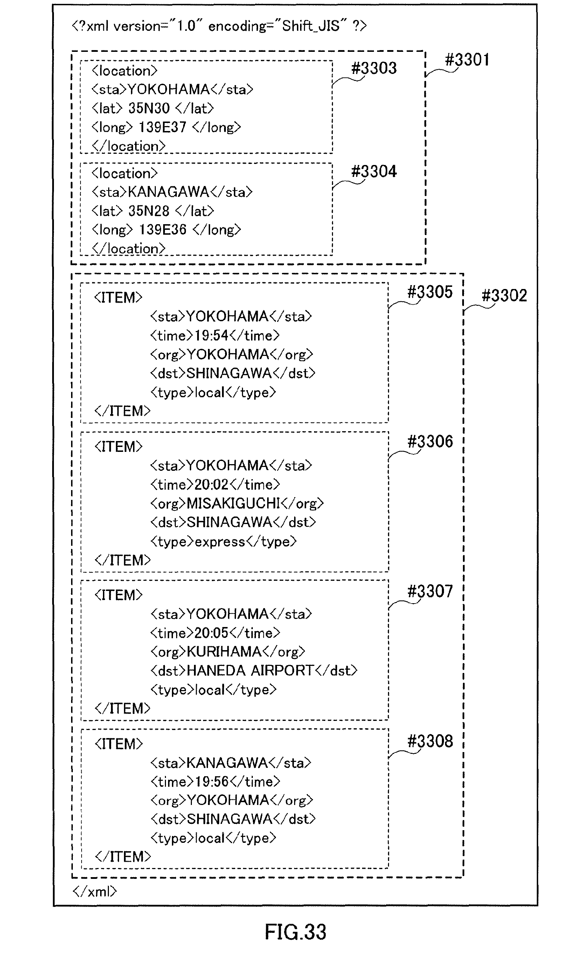

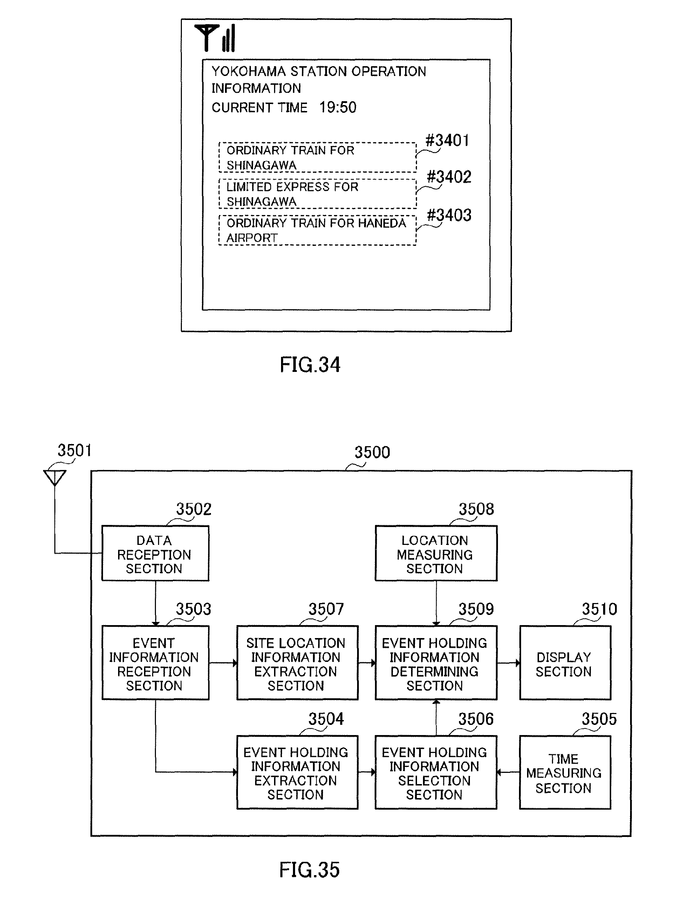

Next, the operation of terminal apparatus 3000 will be explained using FIG.32 to FIG.34. FIG.32 is a flow chart indicating the operation of terminal apparatus 3000, FIG.33 illustrates the station information and FIG.34 illustrates the operation information displayed on terminal apparatus 3000.

Distribution server 3100 is connected to a base station apparatus (not shown) and the base station apparatus distributes one or a plurality of pieces of station information to terminal apparatus 3000 in the cell. Furthermore, the base station apparatus also distributes station information using broadcasting schemes such as an IP broadcast scheme or IP multicast scheme which broadcasts data to terminal apparatuses using terrestrial digital broadcasting or a communication network.

First, data reception section 3002 receives station information first (step ST3201). As shown in FIG. 33, the station information includes station location information #3301 and operation information #3302. Furthermore, station location information #3301 includes location information #3303 of Yokohama Station and location information #3304 of Kanagawa Station near Yokohama Station, for example. On the other hand, operation information #3302 includes information #3305, #3306, #3307 of departure times of trains at Yokohama Station and information #3308 of departure times of trains at the Kanagawa Station, for example.

The station information is described in a structural language, for example, in XML (eXtensible Markup Language) as shown in FIG.33. Furthermore, in the station information, station location information is bracketed by <location> and </location> and operation information is bracketed by <ITEM> and </ITEM>.
Furthermore, in station location information #3301, information of a station name is bracketed by <sta> and </sta>, information of the latitude of a station is bracketed by <lat> and </lat> and information of the longitude of a station is bracketed by <long> and </long>. Furthermore, in operation information #3302, information of a station name is bracketed by <sta> and </sta>, and this shows that it is information of a station bracketed by <sta> and </sta>. Furthermore, in operation information #3302, information of a departure time is bracketed by <time> and </time>, information of a station of origin is bracketed by <org> and </org>, information of a terminal station is bracketed by <dst> and </dst> and information of the type of a train such as limited express is bracketed by <type> and </type>.

Next, time measuring section 3005 measures the current time and location measuring section 3008 measures the current location (step ST3202).

Next, operation information selection section 3006 selects information of departure times of trains which leave Yokohama Station and Kanagawa station in an hour from the current time, for example. When, for example, operation information #3302 as shown in FIG.33 is received and the current time is 19:50, operation information selection section 3006 selects information of departure times of #3305, #3306, #3307, #3308.

Next, operation information determining section 3009 decides whether or not a station is located within a predetermined distance from terminal apparatus 3000 out of the operation information selected by operation information selection section 3006 (step ST3203). When the station is located within the predetermined distance from terminal apparatus 3000, operation information determining section 3009 selects operation information of stations located within a predetermined distance from the current location. For example, when operation information #3302 as shown in FIG.33 is received and also the current location is near Yokohama Station, operation information determining section 3009 selects information of departure times #3305, #3306, #3307.

Next, display section 3010 displays the information of the departure time selected by operation information determining section 3009 as the selected operation information (step ST3204). For example, when operation information determining section 3009 selects information of departure times #3305, #3306, #3307, display section 3010 displays information of departure time #3305 as information of departure time #3401, displays information of departure time #3306 as information of departure time #3402 and displays information of departure time #3307 as information of departure time #3403.
At this time, since the departure time approaches the current time in order of information of departure time #3401, information of departure time #3402, information of departure time #3403, information of a departure time closer to the current time is displayed closer to the top. That is, display section 3010 displays information of departure time #3401, information of departure time #3402, information of departure time #3403 in that order from the top. In FIG.32 to FIG.34, operation information of departure times of trains are used, but it is also possible to use operation information of arrival times of trains.

Thus, according to this Embodiment 12, since operation information corresponding to the current location and current time is selected and displayed from operation information of various time zone received, so that it is possible to deliver flexible information according to the user's needs. Furthermore, according to this Embodiment 12, the distribution server need not edit station information for each terminal apparatus, so that it is possible to reduce a processing load on the distribution server. Furthermore, according to this Embodiment 12, when an operation situation is changed due to an accident or the like, it is possible to receive a distribution of station information in consideration of the changed operation situation from the distribution server, so that the user of the terminal apparatus can obtainreal-timeinformation. Furthermore, according to this Embodiment 12, since operation information of a departure time or arrival time close to the current time is displayed at the top, it is possible to quickly find out operation information of a train on which the user is most likely to get.

In this Embodiment 12, it is assumed that operation information of trains is displayed on a terminal apparatus, but the present invention is not limited to this, and in the case of any vehicle such as a bus or airplane which departs from a loading zone at a predetermined time, it is possible to display operation information of an arbitrary vehicle on the terminal apparatus. Furthermore, according to this Embodiment 12, operation information of a departure/arrival time closer to the current time is displayed closer to the top, but the present invention is not limited to this and it is possible to display operation information in an arbitrary order, for example, operation information is displayed in order of receipt. Furthermore, in this Embodiment 12, it is assumed that operation information of Yokohama Station is displayed, but the present invention is not limited to this, and it is possible to display operation information of a station nearest to an arbitrary place.
Furthermore, in this Embodiment 12, it is assumed that distribution server 3100 is connected to a base station, but the present invention is not limited to this, and it is also possible to connect one distribution server 3100 to a number of base stations. Furthermore, in this Embodiment 12, it is assumed that distribution server 3100 is connected to a base station, but the present invention is not limited to this, and distribution server 3100 can also be connected to the base station via a network.

### (Embodiment 13)

FIG.35 is a block diagram showing the configuration of terminal apparatus 3500 according to Embodiment 13 of the present invention.

Data reception section 3502 down-converts a received signal received through antenna 3501 from a radio frequency to a baseband frequency and outputs it to event information reception section 3503.

Event information reception section 3503 extracts event information from a received signal input from data reception section 3502 and outputs it to event holding information extraction section 3504 and site location information extraction section 3507. Here, the event information includes site location information (event site information) which is information of a site where each event is held and event holding information (start time information) which is information of a start time at which the event is held at each event site. Furthermore, the event information includes information of the type of event such as movies, plays or exhibitions and information of contents of the event or the like.

Event holding information extraction section 3504 extracts event holding information from the event information input from event information reception section 3503 and outputs it to event holding information selection section 3506.

Time measuring section 3505 measures the current time and outputs the measured time information which is information of the measured time to event holding information selection section 3506.

Event holding information selection section 3506 compares the start time of an event corresponding to each event site in the event holding information input from event holding information extraction section 3504 with the time of the measured time information input from time measuring section 3505. Then, event holding information selection section 3506 selects event holding information starting at the time after the current time on and outputs only the selected event holding information to event holding information determining section 3509.

Site location information extraction section 3507 extracts site location information from the event information input from event information reception section 3503 and outputs it to event holding information determining section 3509.

Location measuring section 3508 measures the current location of terminal apparatus 3500 through GPS, for example, and outputs current location information which is information of the measured current location to event holding information determining section 3509.

Event holding information determining section 3509 compares the location of the event site where the event in site location information input from site location information extraction section 3507 is held with the current location in the current location information input from location measuring section 3508. Then, event holding information determining section 3509 selects an event site located within a predetermined distance from the current location. Furthermore, event holding information determining section 3509 selects only event holding information of the selected event site out of the event holding information input from event holding information selection section 3506 and outputs the selected event holding information to display section 3510.

Display section 3510 displays the event holding information input from event holding information determining section 3509.

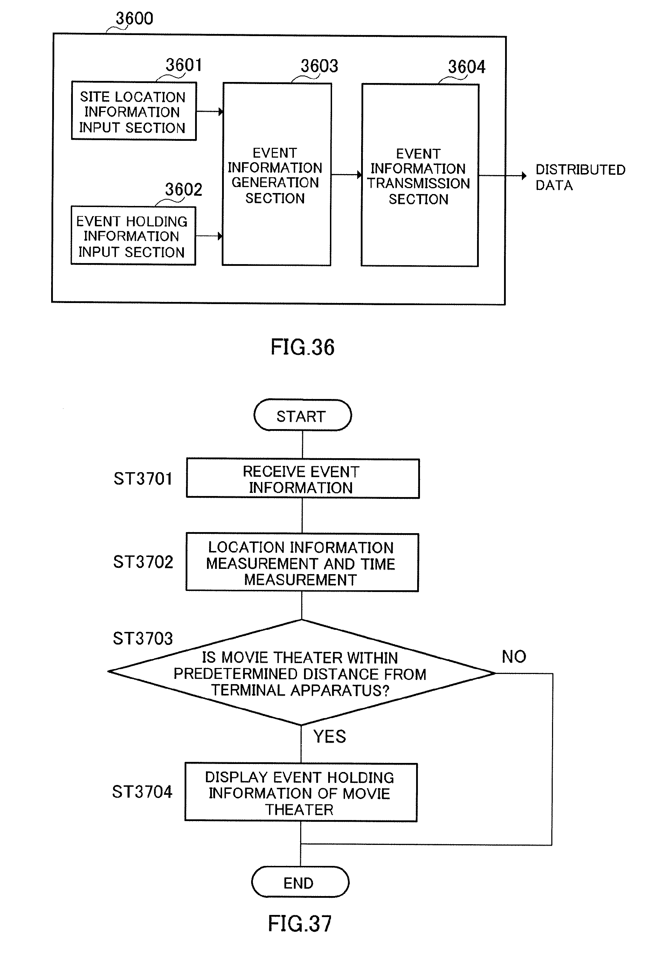

Next, the configuration of distribution server 3600 will be explained using FIG.36. FIG.36 is a block diagram showing the configuration of distribution server 3600.

Site location information input section 3601 generates site location information from data indicating the location of the site where each event input from the outside is held and outputs it to event information generation section 3603.

Event holding information input section 3602 generates event holding information from data of the start time at which the event input from the outside is held and outputs it to event information generation section 3603.

Event information generation section 3603 which is a transmission signal generation section generates event information including site location information input from site location information input section 3601 and event holding information input from event holding information input section 3602 and outputs the generated event information to event information transmission section 3604.

Event information transmission section 3604 outputs event information input from event information generation section 3603 as distribute data.

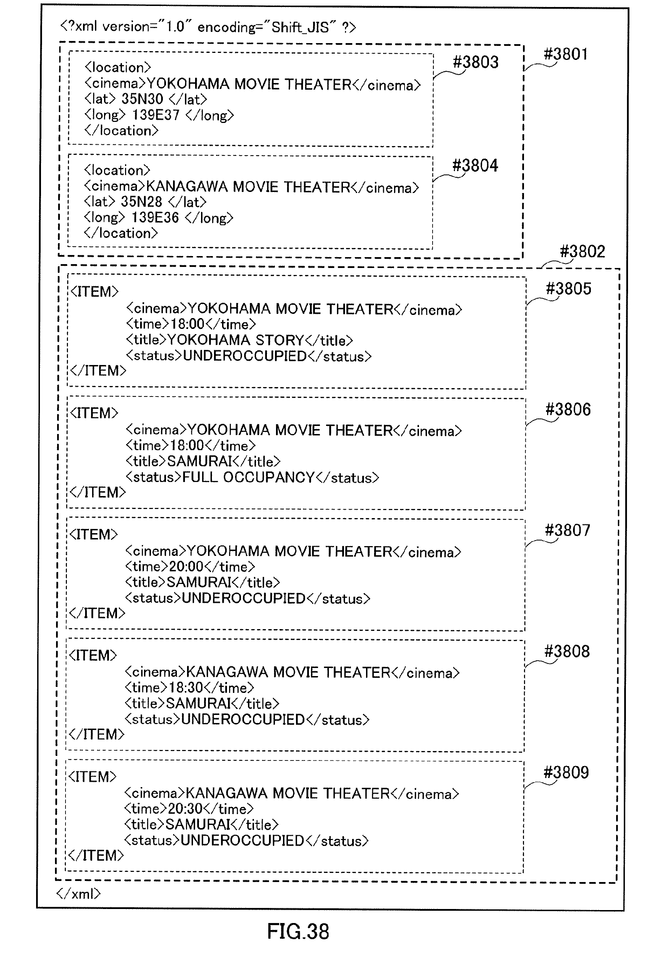

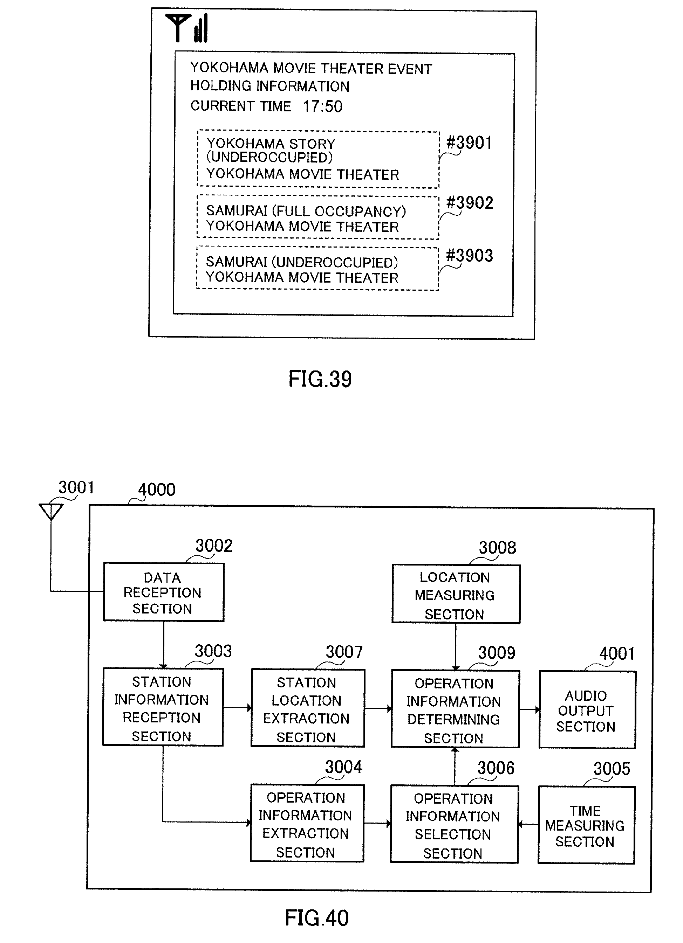

Next, the operation of terminal apparatus 3500 will be explained using FIG.37 to FIG.39. FIG.37 is a flow chart showing the operation of terminal apparatus 3500, FIG.38 illustrates event information and FIG.39 illustrates start time information displayed on terminal apparatus 3500.

Distribution server 3600 is connected to a base station apparatus (not shown) and the base station apparatus distributes one or a number of pieces of event information to terminal apparatus 3500 in the cell. Furthermore, the base station apparatus distributes event information using a broadcasting scheme such as an IP broadcast scheme or IP multicast scheme which broadcasts data to a terminal apparatus using terrestrial digital broadcasting or a communication network.

First, data reception section 3502 receives event information (step ST3701). The event information includes site location information #3801 and event holding information #3802 as shown in FIG.38. Furthermore, site location information #3801 includes, for example, site location information #3803 of Yokohama movie theater and site location information #3804 of Kanagawa movie theater near Yokohama movie theater. Furthermore, event holding information #3802 includes event holding information #3805, #3806, #3807 of the Yokohama movie theater and event holding information #3808, #3809 of the Kanagawa movie theater.

The event information is described in a structural language and, for example, described using XML (eXtensible Markup Language) as shown in FIG.38. Furthermore, in the event information, site location information #3801 is bracketed by <location> and </location> and event holding information #3802 is bracketed by <ITEM> and </ITEM>. Furthermore, in site location information #3801, information of a name of a movie theater is bracketed by <cinema> and </cinema>, information of the latitude of a movie theater is bracketed by <lat> and </lat> and information of the longitude of a movie theater is bracketed by <long> and </long>. Furthermore, in event holding information #3802, information of a movie theater name is bracketed by <cinema> and </cinema>, and this shows that it is information of a movie theater bracketed by <cinema> and </cinema>. Furthermore, in event holding information #3802, information of start time of a movie is bracketed by <time> and </time>, information of a title of a movie screened is bracketed by <title> and </title> and information of vacancy status is bracketed by <status> and </status>.

Next, time measuring section 3505 measures the current time and location measuring section 3508 measures the current location (step ST3702).

Next, event holding information selection section 3506 selects information of a start time at which a movie is put on the screen in an hour and half from the current time. For example, when event holding information #3802 shown in FIG.38 is received and the current time is 17:50, event holding information selection section 3506 selects event holding information #3805, #3806, #3807, #3808 in which the movies start before 20:20.

Next, event holding information determining section 3509 decides whether or not the site is located within a predetermined distance from terminal apparatus 3500 out of the event holding information selected by event holding information selection section 3506 (step ST3703). When the site is located within the predetermined distance from terminal apparatus 3500, event holding information determining section 3509 selects event holding information at a site located within a predetermined distance from the current location. For example, when event holding information #3802 as shown in FIG.38 is received, and at the same time the current location is close to Yokohama movie theater, event holding information determining section 3509 selects event holding information #3805, #3806, #3807.

Next, display section 3510 displays the event holding information selected by event holding information determining section 3509 as the selected event holding information (step ST3704). For example, when event holding information determining section 3509 has selected event holding information #3805, #3806, #3807, display section 3510 displays event holding information #3805 as event holding information #3901 and displays event holding information #3806 as event holding information #3902, and also displays event holding information #3807 as event holding information #3903. At this time, since the start time of a movie approaches the current time in order of event holding information #3901, event holding information #3902, event holding information #3903, and therefore event holding information with the start time closer to the current time is displayed closer to the top. That is, display section 3510 displays event holding information #3901, event holding information #3902, event holding information #3903 in that order from the top. At this time, display section 3510 displays the event holding information together with the information of vacancy status.

According to this Embodiment 13, event holding information according to the current location and current time from the event information of each time zone received is selected and displayed, so that it is possible to provide flexible information in response to the user's needs. Furthermore, according to this Embodiment 13, the distribution server need not edit event information for each terminal apparatus, so that it is possible to reduce processing load of the distribution server. Furthermore, according to this Embodiment 13, when the start time of the movie is changed, it is possible to receive the distribution of event information in consideration of the changed start time of the movie from the distribution server, so that the user of the terminal apparatus can obtain real-time information. Furthermore, according to this Embodiment 13, event holding information of a start time of a movie that is close to the current time is displayed at the top, so that it is possible to quickly browse event holding information of events that can be appreciated with no wait.

In this Embodiment 13, it is assumed that a start time of movies at movie theaters are displayed on a terminal apparatus, but the present invention is not limited to this, and it is possible to display event holding times of arbitrary events such as a play or exhibition. Furthermore, in this Embodiment 13, it is assumed that event holding information of a start time of a movie closer to the current time is displayed closer to the top, but the present invention is not limited to this, and it is possible to display event holding information in an arbitrary order such as displaying event holding information in order of receipt. Furthermore, in this Embodiment 13, it is assumed that distribution server 3600 is connected to a base station, but the present invention is not limited to this, and one distribution server 3600 can be connected to a number of base stations. Furthermore, in this Embodiment 13, it is assumed that distribution server 3600 is connected to a base station, but the present invention is not limited to this, and distribution server 3600 can be connected to the base station via a network.

### (Embodiment 14)

FIG.40 is a block diagram showing the configuration of terminal apparatus 4000 according to Embodiment 14 of the present invention.

Terminal apparatus 4000 according to this Embodiment 14 corresponds to terminal apparatus 3000 according to Embodiment 12 shown in FIG.30 provided with audio output section 4001 as shown in FIG.40 instead of display section 3010. In FIG.40, the same components as those in FIG.30 are assigned the same reference numerals and explanations thereof will be omitted. Moreover, the configuration of the distribution server is the same as that in FIG.31 and explanations thereof will be omitted.

Operation information determining section 3009 compares the location of a station in station location information input from station location extraction section 3007 with the current location of current location information input from location measuring section 3008. Then, operation information determining section 3009 selects a station located within a predetermined distance from the current location. Furthermore, operation information determining section 3009 selects only information including operation information of the selected station out of operation information input from operation information selection section 3006, converts the selected operation information to audio data and outputs it to audio output section 4001.

Audio output section 4001 outputs the audio data input from operation information determining section 3009. In this case, audio output section 4001 reads the operation information selected by operation information determining section 3009 with a voice. Furthermore, audio output section 4001 outputs with a voice operation information of arrival/departure times in ascending order of proximity to the current time. The operation of terminal apparatus 4000 is the same as the operation in FIG.32 except in that operation information is output with a voice instead of displaying operation information, and therefore explanations thereof will be omitted.

As described above, in addition to the effects of Embodiment 12, with this Embodiment 14, operation information is output with a voice, so that it is possible to save the trouble of viewing the screen of the terminal apparatus.

In this Embodiment 14, it is assumed that operation information of trains is output from the terminal apparatus with a voice, but the present invention is not limited to this, and in the case of any vehicle such as a bus or airplane which departs from a loading zone at a predetermined time, it is possible to output operation information of an arbitrary vehicle with a voice from the terminal apparatus . Furthermore, in this Embodiment 14, it is assumed that that operation information of departure/arrival times is output with a voice in ascending order of proximity to the current time, but the present invention is not limited to this, and it is possible to output operation information with a voice in an arbitrary order such as outputting operation information with a voice in order of receipt. Furthermore, in this Embodiment 14, it is assumed that operation information of Yokohama Station is output with a voice, but the present invention is not limited to this, and it is possible to output operation information of a station nearest to an arbitrary place with a voice. Furthermore, this Embodiment 14 assumes that distribution server 3100 is connected to a base station, but the present invention is not limited to this, and it is also possible to connect one distribution server 3100 to a plurality of base stations. Furthermore, in this Embodiment 14, it is assumed that distribution server 3100 is connected to a base station, but the present invention is not limited to this, and distribution server 3100 can also be connected to the base station via a network. Furthermore, in this Embodiment 14, it is assumed that operation information is output only with a voice, but the present invention is not limited to this, and it is also possible to display operation information and output it with a voice simultaneously.

### (Embodiment 15)

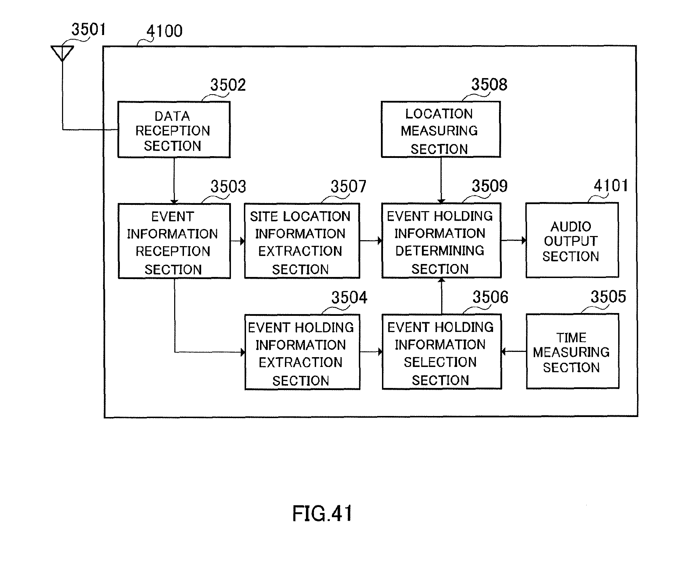

FIG.41 is a block diagram showing the configuration of terminal apparatus 4100 according to Embodiment 15 of the present invention.

Terminal apparatus 4100 according to this Embodiment 15 corresponds to terminal apparatus 3500 according to Embodiment 13 shown in FIG.35 provided with audio output section 4101 as shown in FIG.41 instead of display section 3510. In FIG.41, the same components as those in FIG.35 are assigned the same reference numerals and explanations thereof will be omitted.

Event holding information determining section 3509 compares the location of an event site where an event in site location information input from site location information extraction section 3507 is held with the current location of current location information input from location measuring section 3508. Event holding information determining section 3509 then selects an event site located within a predetermined distance from the current location. Event holding information determining section 3509 also selects only event holding information of the selected event site out of event holding information input from event holding information selection section 3506 and converts the selected event holding information to audio data and outputs it to audio output section 4101.

Audio output section 4101 outputs the audio data input from event holding information determining section 3509. In this case, audio output section 4101 reads the event holding information selected by event holding information determining section 3509 with a voice. Furthermore, audio output section 4101 outputs event holding information of start times of movies with a voice in ascending order of proximity to the current time. The operation of terminal apparatus 4100 is the same as the operation in FIG.37 except in that event holding information is output with a voice instead of displaying event holding information, and therefore explanations thereof will be omitted.

In this way, in addition to the effects of Embodiment 13, with this Embodiment 15, event holding information is output with a voice, so that it is possible to save the trouble of viewing the screen of the terminal apparatus.

In this Embodiment 15, it is assumed that the start times of movies at movie theaters are output from the terminal apparatus with a voice, but the present invention is not limited to this, and it is also possible output event holding times of arbitrary events such as a play or exhibition with a voice. Furthermore, in this Embodiment 15, it is assumed that event holding information of start times of movies is output with a voice in ascending order of proximity to the current time, but the present invention is not limited to this, and it is possible to output event holding information with a voice in an arbitrary order such that event holding information is output with a voice in order of receipt. Furthermore, in this Embodiment 15, it is assumed that distribution server 3600 is connected to a base station, but the present invention is not limited to this, and one distribution server 3600 can be connected to a number of base stations. Furthermore, in this Embodiment 15, it is assumed that distribution server 3600 is connected to a base station, but the present invention is not limited to this, and distribution server 3600 may also be connected to the base station via a network. Furthermore, in this Embodiment 15, it is assumed that event holding information is only output with a voice, but the present invention is not limited to this, and event holding information may be displayed and output with a voice simultaneously.

Conventionally, as a broadcasting service that broadcasts distribution data to a number of cellular phones simultaneously, one that reports the time of the last train to users who use the station by combining a portable terminal and station service system is known.

In such a broadcasting service, the terminal apparatus periodically transmits location information to a station center server, the station center server distributes the time of the last train to the user's terminal apparatus in consideration of the station nearest to each user' s house based on the received location information of each terminal apparatus.

According to such a conventional apparatus and method, only the time of the last train is reported, which may be useless information for users who do not use the last train, and there is a problem that it is impossible to distribute flexible information in response to the user's needs. Furthermore, according to the conventional apparatus and method, the center server of a station reports the time of the last train in consideration of the location of each terminal apparatus, and therefore when location information is sent from many terminal apparatuses, there is a problem that the processing load on the station center server increases. Furthermore, according to the conventional apparatus and method, it may be possible to display the time of the last train from the current location using only the terminal apparatus by registering all the contents of function and database tables of the station center server in the terminal apparatuses, but in this case, when a schedule of trains is disordered due to an accident or the like, the user has to wait for a long time at the station until the train arrives because the information that the schedule is disordered is not reflected in the terminal apparatus, which result in a problem that real-time information cannot be obtained. Furthermore, according to the conventional apparatus and method, there is a problem that information about events cannot be distributed to terminal apparatuses of users who want to appreciate events such as a movie. The terminal apparatus and received data display method according to Embodiment 12 to Embodiment 15 can solve these conventional problems.

The present application is based on Japanese Patent Application No.2004-28562 filed on February 4, 2004, Japanese Patent Application No.2004-29625 filed on February 5, 2004 and Japanese Patent Application No.2004-29889 filed on February 5, 2004, entire content of which is expressly incorporated by reference herein.

### Industrial Applicability

The present invention is suitable for use to receive distributed data transmitted from a distribution server.

## Claims

1. A terminal apparatus comprising:
a personal information storage section that stores personal information which is information indicating features of predetermined gift receivers;
a reception section that receives receiver information which is information indicating features of a receiver who is assumed to receive the gift and product information which is information of said gift including said receiver information;
a product information selection section that arranges said product information received by said reception section so that said product information including said receiver information of the receiver whose features match the features of said gift receiver comes to the top; and
a display section that displays said product information in order in which said product information is arranged by said product information selection section.

2. The terminal apparatus according to claim 1, further comprising:
a measuring section that measures a current date and time; and
an event determining section that selects said gift receiver for whom a result of subtracting the current date and time measured by said measuring section from a specific date and time stored as said personal information in said personal information storage section is equal to or lower than a threshold,
wherein said product information selection section arranges said product information received by said reception section so that said product information including said receiver information of a receiver whose features match the features of said gift receiver selected by said event determining section comes to the top.

3. The terminal apparatus according to claim 2, further comprising a schedule storage section that stores expiration dates for purchasing before said specific date and time in said gift of said product information selected by said product information selection section, wherein said display section displays said expiration dates of purchasing stored in said schedule storage section up to said expiration date for purchasing.

4. The terminal apparatus according to claim 1, wherein said product information selection section arranges said product information received by said reception section so that said product information of said gift receiver whose communication frequency is equal to or greater than a threshold comes to the top.

5. A terminal apparatus comprising:
a personal information storage section that stores personal information which is information indicating features of predetermined gift receivers;
a reception section that receives receiver information which is information indicating features of a receiver who is assumed to receive the gift and product information which is information of said gift including said receiver information;
a product information selection section that decides whether or not the features of said gift receiver match the features of said receiver and selects, when the decision result shows that the features match, said product information including said receiver information of the receiver whose features match the features of said gift receiver; and
a display section that displays said product information selected by said product information selection section including said decision result when the features match.

6. The terminal apparatus according to claim 5, further comprising:
a measuring section that measure a current date and time; and
an event determining section that selects said gift receiver for whom a result of subtracting the current date and time measured by said measuring section from a specific date and time stored as said personal information in said personal information storage section is equal to or lower than a threshold,
wherein said display section displays said product information selected by said product information selection section including said decision result when the features of said gift receiver selected by said event determining section match the features of said receiver.

7. The terminal apparatus according to claim 5, wherein said display section displays said product information selected by said product information selection section including said decision result when the features of said gift receiver whose communication frequency is equal to or higher than a threshold match the features of said receiver.

8. A distribution server that transmits said product information to the terminal apparatus according to claim 1, said distribution server comprising:
a product information generation section that generates said product information including receiver information; and
a transmission section that transmits said product information generated by said product information generation section.

9. A received data display method comprising the steps of:
storing personal information which is information indicating features of predetermined gift receivers;
receiving receiver information which is information indicating features of a receiver assumed to receive a gift and product information which is information of said gift including said receiver information;
arranging said product information received so that said product information including said receiver information of a receiver whose features match the features of said gift receiver comes to the top; and
displaying said product information in order of the arrangement.

10. The received data display method according to claim 9, further comprising the steps of:
measuring a current date and time; and
selecting said gift receiver for whom a result of subtracting the current date and time measured from a specific date and time stored as said personal information is equal to or lower than a threshold,
wherein said received product information is arranged so that said product information including said receiver information of a receiver whose features match the features of said selected gift receiver comes to the top.

11. The received data display method according to claim 10, further comprising a step of storing expiration dates of purchasing before said specific date and time of said gift in said product information selected, wherein said expiry dates of purchasing stored are displayed up to said expiration date for purchasing.

12. The received data display method according to claim 9, wherein said product information received is arranged so that said product information of said gift receiver whose communication frequency is equal to or greater than a threshold comes to the top.

13. A received data display method comprising the steps of:
storing personal information which is information indicating features of predetermined gift receivers;
receiving receiver information which is information indicating features of a receiver assumed to receive a gift and product information which is information of said gift including said receiver information;
deciding whether the features of said gift receiver match the features of said receiver or not and selecting, when the decision result shows that the features match, said product information including said receiver information of the receiver whose features match the features of said gift receiver; and
displaying said product information selected including said decision result when the features match.

14. The received data display method according to claim 13, further comprising the steps of:
measuring a current date and time; and
selecting said gift receiver for whom a result of subtracting a current date and time measured from a specific date and time stored as said personal information is equal to or lower than a threshold,
wherein said product information selected including said decision result when the features of said gift receiver selected match the features of said receiver is displayed.

15. The received data display method according to claim 13, wherein said product information selected including said decision result when the features of said gift receiver whose communication frequency is equal to or greater than a threshold match the features of said receiver is displayed.
